(19) Europäisches Patentamt
European Patent Office
Office européen des brevets

(11) **EP 3 687 214 A1**

(12) **EUROPEAN PATENT APPLICATION**
published in accordance with Art. 153(4) EPC

(43) Date of publication:
**29.07.2020 Bulletin 2020/31**

(51) Int Cl.:
**H04W 24/10** (2009.01)       **H04W 72/04** (2009.01)
**H04W 88/02** (2009.01)

(21) Application number: **18858034.4**

(22) Date of filing: **18.09.2018**

(86) International application number:
**PCT/JP2018/034526**

(87) International publication number:
**WO 2019/059194 (28.03.2019 Gazette 2019/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.09.2017   JP 2017196409**

(71) Applicant: **NTT DOCOMO, INC.**
**Chiyoda-ku**
**Tokyo 100-6150 (JP)**

(72) Inventors:
• **NAGATA, Satoshi**
  **Tokyo 100-6150 (JP)**
• **KAKISHIMA, Yuichi**
  **Palo Alto**
  **California 94304 (US)**
• **NA, Chongning**
  **Beijing 100190 (CN)**
• **WANG, Xin**
  **Beijing 100190 (CN)**

(74) Representative: **Hoffmann Eitle**
**Patent- und Rechtsanwälte PartmbB**
**Arabellastraße 30**
**81925 München (DE)**

(54) **USER TERMINAL AND WIRELESS COMMUNICATION METHOD**

(57)     The measurement of interference is configured in a flexible manner. A user terminal has a receiving section that receives configuration information, which indicates allocation of an interference measurement resource in a unit resource and a control section that controls measurement of a DL signal based on the configuration information.

FIG. 2

## Description

Technical Field

The present invention relates to a user terminal and a radio communication method in next-generation mobile communication systems.

Background Art

In the UMTS (Universal Mobile Telecommunications System) network, the specifications of long-term evolution (LTE) have been drafted for the purpose of further increasing high speed data rates, providing lower latency and so on (see non-patent literature 1). Also, the specifications of LTE-A (also referred to as "LTE-Advanced," "LTE Rel. 10," "LTE Rel. 11," or "LTE Rel. 12") have been drafted for further broadbandization and increased speed beyond LTE (also referred to as "LTE Rel. 8" or "LTE Rel. 9"), and successor systems of LTE (also referred to as, for example, "FRA (Future Radio Access)," "5G (5th generation mobile communication system)," "5G+ (plus)," "NR (New Radio)," "NX (New radio access)," "New RAT (Radio Access Technology)," "FX (Future generation radio access)," "LTE Rel. 13," "LTE Rel. 14," "LTE Rel. 15," or later versions) are under study.

In LTE Rel. 10/11, carrier aggregation (CA) to integrate multiple component carriers (CCs) is introduced in order to achieve broadbandization. Each CC is configured with the system bandwidth of LTE Rel. 8 as one unit. Furthermore, in CA, a plurality of CCs under the same radio base station (also referred to as an "eNB (eNodeB)," a "BS (Base Station)" and so on) are configured in a user terminal (UE (User Equipment)).

Meanwhile, in LTE Rel. 12, dual connectivity (DC), in which multiple cell groups (CG) formed by different radio base stations are configured in a user terminal, is also introduced. Each cell group is comprised of at least one cell (CC). Since multiple CCs of different radio base stations are aggregated in DC, DC is also referred to as "inter-base station CA (inter-eNB CA)."

Also, in LTE Rel. 8 to 12, frequency division duplex (FDD), in which downlink (DL) transmission and uplink (UL) transmission are made in different frequency bands, and time division duplex (TDD), in which downlink transmission and uplink transmission are switched over time and made in the same frequency band, are introduced.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall Description; Stage 2 (Release 8)," April, 2010

Summary of Invention

Technical Problem

Future radio communication systems (for example, 5G/NR) are expected to realize a variety of radio communication services so as to fulfill varying requirements (for example, ultra-high speed, large capacity, ultra-low latency, etc.).

For example, 5G/NR are under study to provide radio communication services referred to as "eMBB (enhanced Mobile Broad Band)," "IoT (Internet of Things)," "mMTC (massive Machine-Type Communication)," "M2M (Machine To Machine)," "URLLC (Ultra Reliable and Low Latency Communications)" and so on.

In 5G/NR, a user terminal faces complex conditions of interference, and so the problem lies in how to measure interference.

The present invention has been made in view of the above, and it is therefore an object of the present invention to provide a user terminal and a radio communication method, whereby interference measurements can be configured in a flexible manner.

Solution to Problem

According to one aspect of the present invention, a user terminal has a receiving section that receives configuration information, which indicates allocation of an interference measurement resource in a unit resource, and a control section that controls measurement of a DL signal based on the configuration information.

Advantageous Effects of Invention

According to the present invention, the measurement of interference can be configured in a flexible manner.

Brief Description of Drawings

FIG. 1 is a diagram to show examples of resources for the measurement of CSI in multi-layer transmission;
FIG. 2 is a diagram to show an example of an operation in which a user terminal specifies resources for the measurement of CSI;
FIG. 3 is a diagram to show examples of DCIs upon the measurement of CSI according to a first example of the present invention;
FIGs. 4A and 4B are diagrams to show examples of CSI-RS resource indications and CSI-IM resource indications;
FIG. 5 is a diagram to show examples of DCIs upon the measurement of CSI according to a second example of the present invention;

FIG. 6 is a diagram to show examples of CSI-IM resource indications;

FIG. 7 is a diagram to show an example of DCI upon the measurement of CSI according to a third example of the present invention;

FIGs. 8A and 8B are diagrams to show examples of third and fourth candidates of RE patterns for interference measurement resources;

FIGs. 9A and 9B are diagrams to show examples of third and fourth candidates of RE patterns for interference measurement resources;

FIGs. 10A and 10B are diagrams to show examples of third and fourth candidates of RE patterns for interference measurement resources;

FIGs. 11A and 11B are diagrams to show examples of third and fourth candidates of RE patterns for interference measurement resources;

FIG. 12 is a diagram to show an exemplary schematic structure of a radio communication system according to one embodiment of the present invention;

FIG. 13 is a diagram to show an exemplary overall structure of a radio base station according to one embodiment of the present invention;

FIG. 14 is a diagram to show an exemplary functional structure of a radio base station according to one embodiment of the present invention;

FIG. 15 is a diagram to show an exemplary overall structure of a user terminal according to one embodiment of the present invention;

FIG. 16 is a diagram to show an exemplary functional structure of a user terminal according to one embodiment of the present invention; and

FIG. 17 is a diagram to show an exemplary hardware structure of a radio base station and a user terminal according to one embodiment of the present invention.

Description of Embodiments

5G is under study to provide services using a very high carrier frequency of, for example, maximum 100 GHz. Generally speaking, when the carrier frequency increases, it becomes more difficult to secure coverage. The reasons for this include that the distance-induced attenuation becomes more severe and the rectilinearity of radio waves becomes stronger, the transmission power density decreases because of ultra-wideband transmission, and so forth.

So, in order to fulfill the requirements for a variety of types of communication such as those named above even in high frequency bands, studies are in progress to use massive MIMO (Massive MIMO, eFD-MIMO (enhanced Full Dimension Multiple Input Multiple Output)), which uses a very large number of antenna elements. When a very large number of antenna elements are used, beams (antenna directivity) can be formed by controlling the amplitude and/or the phase of signals transmitted/received from each element. This process is also referred to as "beam forming (BF)," and makes it possible to reduce the propagation loss of radio waves. Furthermore, research is underway to increase the number of layers by applying massive MIMO to MU-MIMO.

In order to improve the performance of MU-MIMO, user terminals need to measure interference accurately and send (report) the measurement results as feedback by using CSI (Channel State Information) and the like. The CSI includes channel states, represented by at least one of CQI (Channel Quality Indicator), PMI (Precoding Matrix Indicator) and RI (Rank Indicator).

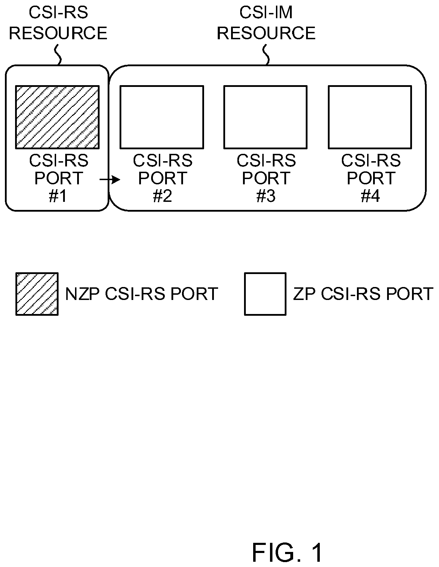

FIG. 1 is a diagram to show examples of resources for the measurement of CSI in multi-layer transmission.

To measure CSI, for example, CSI-RS (Channel State Information-Reference Signal) and CSI-IM (Channel State Information-Interference Measurement) are used. CSI-RS is, for example, a non-zero-power (NZP) CSI-RS, to which transmission power is allocated. CSI-IM refers to, for example, a zero-power (ZP) CSI-RS, to which transmission power is not allocated (muted).

A radio base station schedules the measurement of CSI, and reports CSI-RS resources, which are allocated to CSI-RS, and CSI-IM resources, which are allocated to CSI-IM, to user terminals. The CSI-RS resources include, for example, the port (antenna port) assigned to NZP CSI-RS. The CSI-IM resources include, for example, the port assigned to ZP CSI-RS.

In this drawing, the CSI-RS resources include CSI-RS port #1, which is assigned to NZP CSI-RS. The CSI-IM resources include CSI-RS ports #2 to #4, which are assigned to ZP CSI-RS.

In the CSI-RS resources, NZP CSI-RS is transmitted to user terminals that perform CSI measurements, so that the user terminals measure the received power in the CSI-RS resources as signal power. In the CSI-IM resources, signals for user terminals are muted, so that the user terminals measure the received power in the CSI-IM resources as interference plus noise power.

In MU-MIMO, a radio base station transmits DL signals to a plurality of user terminals in a plurality of layers. Therefore, a user terminal receives multi-user interference (MUI) from the DL signals for other user terminals in the instant cell, in addition to the inter-cell interference (ICI) from other cells' DL signals. When the number of layers increases, the state of interference becomes even more complicated. Also, the number of candidate CSI-RS resources and the number of candidate CSI-IM resources are limited. Therefore, the problem in measuring complex interference conditions lies in how to configure measurement resources in user terminals.

Therefore, the present inventors propose that a user terminal should receive information related to interference measurement resources, including combinations of a plurality of ports and/or channels, and control the measurement of DL signals based on the information related to interference measurement resources. This configuration allows a radio base station to configure flexibly, in the user terminal, CSI measurements for complicated interference.

Now, envisaging future radio communication systems (for example, LTE Rel. 14 or later versions, 5G, NR, etc.), studies are in progress to use a time unit having a variable time length (which may be, for example, at least one of a slot, a minislot and a predetermined number of symbols) as the unit of scheduling for data channels (which include DL data channels and/or UL data channels, and which may be referred to simply as "data" or the like).

A slot is a time unit that depends upon what numerology (for example, the subcarrier spacing and/or the duration of symbols) a user terminal employs. The number of symbols per slot may be determined by the subcarrier spacing. For example, if the subcarrier spacing is 15 kHz or 30 kHz, the number of symbols per slot may be seven or fourteen. When the subcarrier spacing is 60 kHz or greater, the number of symbols per slot may be fourteen.

Subcarrier spacing and the duration of symbols are reciprocal to each other. Therefore, as long as the number of symbols per slot is the same, the higher (wider) the subcarrier spacing, the shorter the length of slots, and the lower (narrower) the subcarrier spacing, the longer the length of slots.

Furthermore, a minislot is a time unit that is shorter than a slot. A minislot may be constituted by fewer symbols (for example, one to "the slot length - 1" symbols) than a slot. When a minislot is contained in a slot, the same numerology as that of the slot (for example, the same subcarrier spacing and/or the same symbol duration) may be applied to the minislot, or a different numerology from that of the slot (for example, a wider subcarrier spacing than that of the slot and/or a shorter symbol duration than that of the slot) may be applied to the minislot.

In future radio communication systems where time units that are different from those of existing LTE systems are introduced, it is likely that the transmission and receipt (allocation) of signals and/or channels are controlled by applying a number of time units to the scheduling of data and the like. When, for example, data is scheduled by using varying time units, multiple data transmission periods and/or data transmission timings may be produced. For example, a user terminal to support a number of time units transmits and receives data that is scheduled in different time units.

To portray an example, scheduling based on a first time unit (for example, a slot unit) (hereinafter also referred to as "slot-based scheduling") and scheduling based on a second time unit that is shorter than the first time unit (for example, a non-slot unit) (hereinafter also referred to as "non-slot-based scheduling") may be used. The "non-slot unit" here may be, for example, a minislot unit, a symbol unit and/or the like. A slot can be constituted by, for example, seven symbols or fourteen symbols, and a minislot can be constituted by one or more symbols, up to "the slot length - 1" symbols.

In this case, the location (for example, the starting location) and the period in the time direction where data is allocated vary depending on what scheduling unit is applied to the data (for example, PDSCH or PUSCH). When slot-based scheduling is used, one piece of data is allocated to one slot. On the other hand, when non-slot-based scheduling is used (for example, when scheduling is made in units of minislots or symbols), data is allocated selectively, to part of the areas in one slot. Therefore, when non-slot-based scheduling is used, it is possible to allocate multiple pieces of data in one slot.

It is also anticipated that non-slot-based scheduling can be suitably applied to URLLC transmission, which at least requires low latency and high reliability. Therefore, in non-slot-based scheduling, it is important to secure the stability of communication (by executing, for example, highly reliable channel estimation and the like).

In this way, if the location to allocate data can be controlled to change, the problem then lies in how to control the location for allocating this data's demodulation reference signal (DMRS). From the perspective of preventing delays in processing time when DMRS is used in receiving processes (including, for example, channel estimation), it is preferable to allocate DMRS in the beginning part of the data-allocating field. The beginning part of the data-allocating field refers to the field where at least the first symbol of the data-allocating field is included.

For example, when a control channel (for example, DCI) is allocated to the first symbol and the second symbol of a slot, the number of symbols where the control channel is allocated is not limited to this, and only part of the resources in the symbols may be used. In this case, a structure is used in which DMRS is allocated in the third symbol, which is the symbol where data starts being allocated (front-loaded location), so that the receiving end can execute receiving processes by using DMRS, at an early timing.

Also, when non-slot-based scheduling is applied to DL communication and/or UL communication, the data transmission period (allocating field) is constituted by one to "the slot length - 1" symbols, as mentioned earlier. In this case, a structure may be used in which DMRS is allocated at least in the symbol where data starts being allocated (front-loaded location).

Furthermore, as to which DMRS pattern (DMRS configuration) is applied, a number of types may be used here. For example, a DMRS configuration type 1 (configuration type 1) and a DMRS configuration type 2 (configuration type 2) may be used as types of DMRS configurations (DMRS configuration types) to use when DMRS is allocated in the beginning part of the data-allocating field. Now, DMRS configuration type 1 and DMRS configuration type 2 will be described below. Obviously, DMRS configuration types that can be applied are not limited to these two, and three or more DMRS configuration types, or one DMRS configuration type, may be used as well. Also, the DMRS configurations may show different patterns and/or have different numbers of patterns between DL and UL, depending on which waveform (for example, OFDM or DFT-S-OFDM) is used.

<DMRS Configuration Type 1>

DMRS configuration type 1 uses combs (transmission frequency patterns) and cyclic shifts (CSs) when DMRS is allocated in one symbol. For example, up to four antenna ports (APs) are supported using two types of combs and two types of CSs (comb 2 + 2 CSs). An AP may be read as a layer.

In the event DMRS is allocated to two neighboring symbols, orthogonal codes (TD-OCCs) that are defined in the time direction (for time division) may be used, in addition to combs and cyclic shifts (CSs). For example, by using two types of combs, two types of CSs, and TD-OCCs ({1, 1} and {1, -1}), up to eight APs can be supported. Note that, in this case, a configuration to support up to four APs without using the TD-OCCs ({1, 1} and {1, -1}) may be used. Furthermore, TDM may be applied without using TD-OCCs.

<DMRS Configuration Type 2>

In DMRS configuration type 2, when DMRS is allocated in one symbol, orthogonal codes (FD-OCCs) that are defined in the frequency direction (for frequency division) are used. For example, orthogonal codes (two FD-OCCs) may be applied to two resource elements (REs) that neighbor each other in the frequency direction, to support up to six APs.

When DMRS is allocated in two neighboring symbols, orthogonal codes that are defined in the frequency direction (FD-OCCs) and orthogonal codes that are defined in the time direction (TD-OCCs) may be used. For example, orthogonal codes (two FD-OCCs) may be applied to two resource elements (REs) that neighbor each other in the frequency direction, and, furthermore, TD-OCCs ({1, 1} and {1, - 1}) may be applied to two REs that neighbor each other in the time direction, to support up to twelve APs. Note that, in this case, a configuration to support up to six APs without using TD-OCCs ({1, 1} and {1, -1}) may be used. Furthermore, TDM may be applied without using TD-OCCs.

As described above, it may be possible to use one of a plurality of DMRS configuration types as a DMRS pattern.

So, the present inventors have come up with the idea of configuring interference measurement resources by using such patterns. This configuration allows a radio base station to configure flexibly, in user terminals, CSI measurements for complicated interference.

Now, embodiments of the present invention will be described in detail below with reference to the accompanying drawings. The radio communication methods according to the herein-contained embodiments may be applied individually or may be applied in combination.

(Radio Communication Method)

In the present embodiment, a radio base station configures interference measurement resources, which are resources that a user terminal can use to measure CSI, in a specific period. In addition, although a case will be described with the present embodiment where the period for configuring interference measurement resources is a slot, this period may be a period other than a slot (for example, one of a subframe, a minislot, a subslot, a radio frame and a symbol). In the measurement of CSI, at least one of a signal addressed to the measuring user terminal, MUI, ICI and noise may be measured.

At least one of NZP CSI-RS for simulating a multi-user interference signal, ZP CSI-RS for use with the multi-user interference signal, a demodulation reference signal (DMRS) for use with the actual multi-user interference signal, and another reference signal in NR can be used as a reference signal for use in the measurement of CSI.

DMRS is used in channel estimation for PDSCH (Physical Downlink Shared Channel) demodulation. Other reference signals in NR may include the mobility reference signal (MRS), which is used in measurement for beam selection, or the phase noise compensation reference signal (PTRS (Phase Tracking Reference Signal)), which is used to compensate for phase noise. Furthermore, the reference signals for measuring interference are not limited to these.

One interference measurement resource may include a combination of different types of resources (for example, ports and/or channels). For example, an interference measurement resource may include at least two of the port assigned to NZP CSI-RS (NZP CSI-RS port), the port assigned to ZP CSI-RS (ZP CSI-RS port), the port assigned to DMRS (DMRS port), the PDSCH corresponding to the DMRS port, and a port assigned to another reference signal in NR. In addition, the NZP CSI-RS port and the ZP CSI-RS port may be both referred to as "CSI-RS ports."

The radio base station may configure signal measurement resources, which are resources for use in measuring DL signals for a user terminal, in this user terminal. The signal measurement resources may be the ports and/or channels assigned to DL signals with non-zero transmission power. Also, the signal measurement resources may include at least one port and/or channel in the interference measurement resources. The signal measurement resources may be referred to as "signal ports."

The signal measurement resources include, for example, at least one of the NZP CSI-RS port, the DMRS port, the PDSCH corresponding to the DMRS port and the port assigned to another reference signal in NR.

Note that the interference measurement resources and the signal measurement resources may indicate the time resources (for example, symbols) and the frequency resources (for example, subcarriers) allocated to the reference signal of each port.

The radio base station commands the measurement of CSI, and reports the signal measurement resources and/or the interference measurement resources of the period for CSI measurement, to the user terminal. The radio base station may report signal measurement resources and/or interference measurement resources periodically, or report signal measurement resources and/or interference measurement resources aperiodically. The cycle of reporting signal measurement resources may be different from the cycle of reporting interference measurement resources.

If both signal measurement resources and interference measurement resources are configured in a given period, the user terminal identifies the CSI-RS (signal component) and the CSI-IM (interference component and noise component) based on the signal measurement resources and the interference measurement resources.

Multiple candidate signal measurement resources and/or multiple candidate interference measurement resources may be configured in the user terminal in advance. Also, prior to the measurement of CSI, the radio base station may report multiple candidate signal measurement resources and/or multiple candidate interference measurement resources to the user terminal by using at least one of system information (for example, at least one of the master information block (MIB) and system information blocks (SIBs)), higher layer signaling (for example, at least one of RRC (Radio Resource Control) signaling and MAC (Medium Access Control) signaling), and physical layer signaling (for example, DCI (Downlink Control Information)).

When measuring CSI, the radio base station may report identification information (for example, an index) that specifies one signal measurement resource among a plurality of candidate signal measurement resources, to the user terminal, or report identification information that specifies one interference measurement resource among a plurality of candidate resources, to the user terminal. For example, the radio base station may report the identification information by using physical layer signaling (for example, DCI). The user terminal may specify the resources that correspond to the identification information that is reported.

In this way, the radio base station reports information that identifies the signal measurement resources and/or the interference measurement resources, so that the amount of information that is reported upon CSI measurement can be reduced.

Also, when measuring CSI, the radio base station may report information related to the configuration of the signal measurement resources to the user terminal. For example, the radio base station may report the signal measurement resources by using physical layer signaling (for example, DCI). This allows the radio base station to configure signal measurement resources dynamically (for example, on a per slot basis).

Hereinafter, interference measurement resources will be referred to as "CSI-IM resources."

(First Example)

CSI-IM resources, according to the first example, include NZP CSI-RS ports and/or ZP CSI-RS ports.

In the first example, signal measurement resources will be referred to as "CSI-RS resources." CSI-RS resources include at least one NZP CSI-RS port assigned to a user terminal that measures CSI.

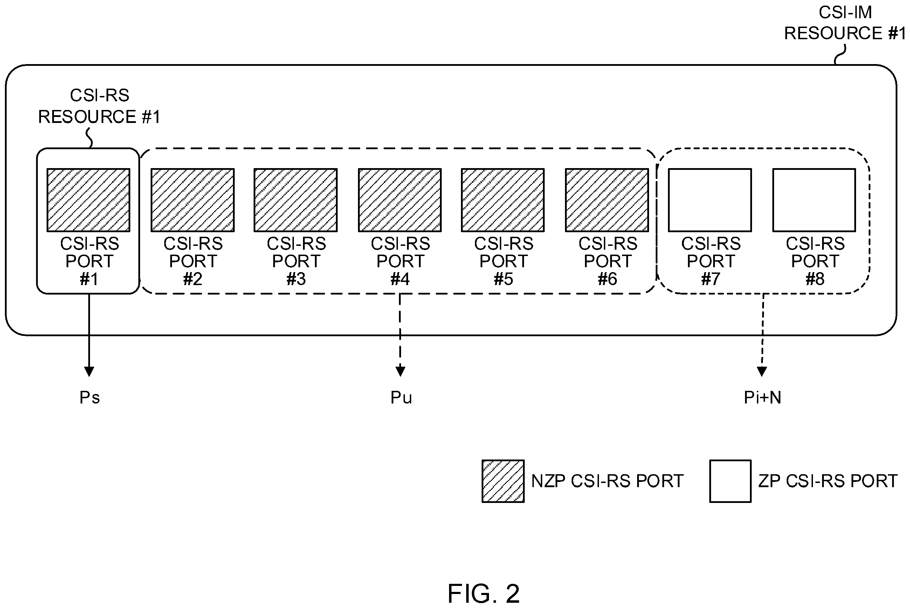

FIG. 2 is a diagram to show an example of an operation in which the user terminal specifies resources for the measurement of CSI.

In this drawing, CSI-IM resource #1 and CSI-RS resource #1 are configured in a specific slot. CSI-IM resource #1 includes CSI-RS ports #1 to #6 assigned to NZP CSI-RS and CSI-RS ports #7 and #8 assigned to ZP CSI-RS. CSI-RS resource #1 includes CSI-RS port #1 assigned to NZP CSI-RS. That is, CSI-IM resource #1 includes CSI-RS resource #1.

When both a CSI-RS resource and a CSI-IM resource are configured in a given slot and several CSI-RS ports are included in both of the CSI-RS resource and the CSI-IM resource, the user terminal treats the CSI-RS ports as CSI-RSs, and treats non-CSI-RS ports in the CSI-IM resource as CSI-IMs.

In this drawing, in a specific slot, CSI-IM resource #1 and CSI-RS resource #1 are configured, and CSI-RS port #1 is included in both CSI-IM resource #1 and CSI-RS resource #1, so that the user terminal treats CSI-RS port #1 as a CSI-RS and treats CSI-RS ports #2 to #8 as CSI-IMs.

The user terminal measures the received power of CSI-RS port #1, which is specified as CSI-RS, as signal power Ps.

Among the resources specified as CSI-IM, the NZP CSI-RS ports are assigned as CSI-RS resources to other users in the instant cell. Therefore, the user terminal measures the received power of the NZP CSI-RS ports, among CSI-IMs, as interference (MUI) power Pu that arises from the DL signals for other user terminals in the instant cell.

Among the resources specified as CSI-IM, the ZP CSI-RS ports are assigned as CSI-RS resources (NZP CSI-RS ports) to other cells. Therefore, the user terminal measures the received power of the ZP CSI-RS ports, among CSI-IMs, as the sum (Pi+N) of the interference (ICI) power Pi and the noise power N from the DL signals for other cells.

After this, based on these measurement results, the user terminal calculates the SINR (Signal to Interference plus Noise Ratio) using the following equation:

$$SINR = \frac{Ps}{Pu+Pi+N} \qquad \text{(Equation 1)}$$

Following that, the user terminal calculates a CQI (Channel Quality Indicator) based on the SINR, and reports the CQI to the radio base station.

Note that, in the CSI measurement, the user terminal does not have to use one or two of Ps, Pu and Pi+N. For example, if the CSI-IM resources include no ZP CSI-RS ports, the user terminal may calculate the SINR without using Pi+N. By this means, the user terminal can measure the impact of MUI. For example, if the CSI-IM resources include no NZP CSI-RS ports other than the CSI-RS resource, the user terminal may calculate the SINR without using Pu. This allows the user terminal to measure the impact of ICI and noise.

Next, the method of reporting CSI-RS resources and/or CSI-IM resources from the radio base station to the user terminal will be described.

The radio base station may command, by using DL control information (DCI), the user terminal to measure CSI.

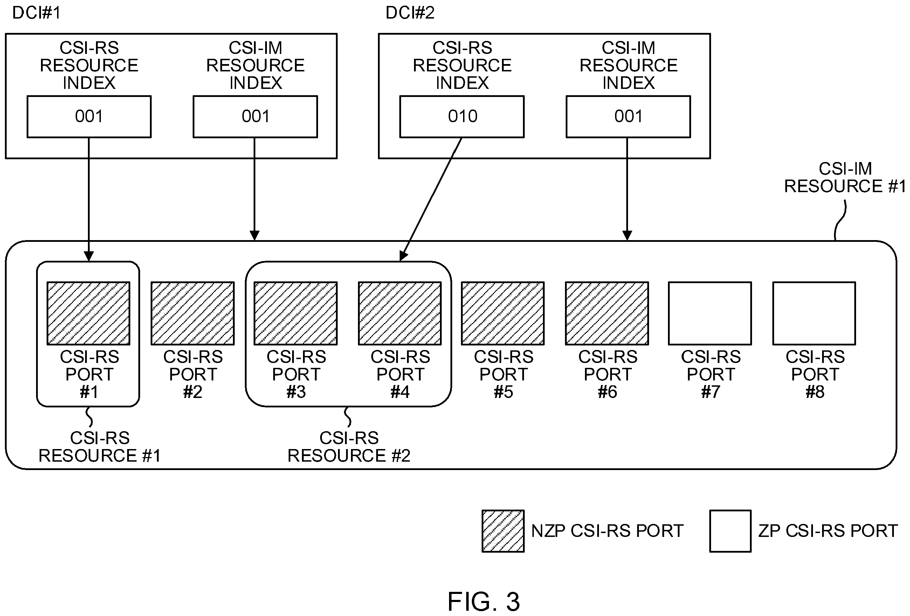

FIG. 3 is a diagram to show examples of DCIs upon the measurement of CSI according to the first example of the present invention.

Two fields for CSI measurement may be added to an existing DCI format. The two fields are, for example, a three-bit CSI-RS resource index to indicate CSI-RS resources, and a three-bit CSI-IM resource index to indicate CSI-IM resources. Note that the CSI-RS resource index and/or the CSI-IM resource index need not be three bits.

Prior to CSI measurement, a CSI-RS resource associated with a CSI-RS resource index may be configured in the user terminal, and a CSI-IM resource associated with a CSI-IM resource index may be configured in the user terminal.

If CSI measurement to measure signal power in a given slot is conducted, the DCI of that slot includes a CSI-RS resource index. Also, if CSI measurement to measure interference power in a given slot is conducted, the DCI of that slot includes a CSI-IM resource index.

By performing CSI measurement to measure signal power and interference power in a specific slot, DCI #1 of that slot includes a CSI-RS resource index and a CSI-IM resource index. In DCI #1, the CSI-RS resource index is "001," and the CSI-IM resource index is "001." The user terminal, having received DCI #1, specifies CSI-RS resource #1 corresponding to the CSI-RS resource index "001," and specifies CSI-IM resource #1 corresponding to the CSI-IM resource index "001." Here, CSI-RS resource #1 includes CSI-RS port #1.

CSI measurement is conducted by a different user terminal and/or in a different slot than DCI #1, so that DCI #2 of that slot includes a CSI-RS resource index and a CSI-IM resource index. In DCI #2, the CSI-RS resource index indicates "010," and the CSI-IM resource index indicates "001." When receiving DCI #2, the user terminal specifies CSI-RS resource #2 corresponding to the CSI-RS resource index "010," and specifies CSI-IM resource #1 corresponding to the CSI-IM resource index "001." Here, CSI-RS resource #2 includes CSI-RS ports #3 and #4. In this way, a number of CSI-RS ports included in a CSI-RS resource correspond, respectively, to a plurality of layers assigned to that user terminal.

Prior to the CSI measurement, the radio base station may report CSI-RS resource indications, which indicate multiple candidates for the CSI-RS resource, and/or CSI-IM resource indications, which indicate multiple candidates for the CSI-IM resource, to the user terminal, by using at least one of system information, higher layer signaling and physical layer signaling.

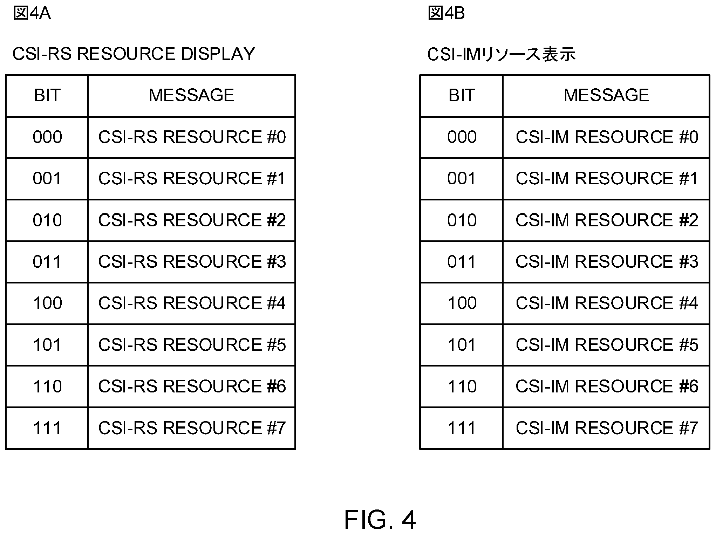

FIGs. 4 are diagrams to show examples of CSI-RS resource indications and CSI-IM resource indications.

The CSI-RS resource indications in FIG. 4A show multiple CSI-RS resource indices as candidate CSI-RS resource indices. The CSI-RS resource indications further show which CSI-RS resource is associated with each CSI-RS resource index.

Similarly, the CSI-IM resource indications in FIG. 4B show multiple CSI-IM resource indices as candidate CSI-IM resource indices. The CSI-IM resource indications further show which CSI-IM resource is associated with each CSI-IM resource index.

From the CSI-RS resource indications, the user terminal selects the CSI-RS resource corresponding to the CSI-RS resource index indicated by DCI. In addition, from the CSI-IM resource indications, the user terminal selects the CSI-IM resource corresponding to the CSI-IM resource index indicated by DCI.

CSI-RS resource #0 may indicate that no port is included (signal power measurement is not commanded). This allows the radio base station to command CSI measurement to measure only the interference power in a specific slot, and report the CSI-IM resource alone.

Likewise, CSI-IM resource #0 may indicate that no port is included (CSI measurement is not commanded). This allows the radio base station to command CSI measurement to measure only the signal power in a specific slot, and report the CSI-RS resource alone.

Also, if neither a CSI-RS resource nor a CSI-IM resource is configured in a given slot, it is possible to keep the above bits attached, and the user terminal may ignore these bits. Alternatively, in this slot, the above bits may serve a different purpose. Furthermore, the above bits need not be included in DCI.

Next, the CSI measurement in FIG. 3 above will be described in detail below.

CSI-IM resource #1 includes CSI-RS ports #1 to #8. Of these, CSI-RS ports #1 to #6 are each an NZP CSI-RS port. CSI-RS ports #7 and #8 are each a ZP CSI-RS port.

CSI-RS resource #1 includes CSI-RS port #1. CSI-RS port #1 is an NZP CSI-RS port.

The radio base station configures CSI measurement in a specific slot, and triggers (reports) CSI-RS resource #1 and CSI-IM resource #1 by using DCI #1. In this case, CSI-RS port #1 is included in both CSI-RS resource #1 and CSI-IM resource #1, so that the user terminal treats CSI-RS port #1 as CSI-RS, and treats CSI-RS ports #2 to #8, which are non-CSI-RS ports in the CSI-IM resource, as CSI-IMs.

The user terminal measures the received power of CSI-RS port #1 (the CSI-RS of CSI-RS port #1) identified with a CSI-RS, as signal power Ps.

The user terminal measures the received power of CSI-RS ports #2 to #6 (the CSI-RSs of CSI-RS ports #2 to #6), which are NZP CSI-RS ports, among CSI-RS ports #2 to #8 identified with CSI-IMs, as MUI power Pu. Among CSI-RS ports #2 to #8 identified with CSI-IMs, the user terminal measures the received power of CSI-RS ports #7 and #8, which are ZP CSI-RS ports, as the total power (Pi+N) of ICI power and noise power.

Furthermore, the user terminal calculates Ps/(Pu+Pi+N) as the SINR, by using equation 1, calculates a CQI based on the SINR, and reports the CQI to the radio base station.

CSI-RS resource #2 includes CSI-RS ports #3 and #4. CSI-RS ports #3 and #4 correspond to layers #1 and #2, respectively.

The radio base station configures CSI measurement in another user terminal and/or in another slot, and, using DCI #2, triggers CSI-RS resource #2 and CSI-IM resource #1. In this case, CSI-RS ports #3 and #4 are included in both CSI-RS resource #2 and CSI-IM resource #1, so that the user terminal treats CSI-RS port #2 as a CSI-RS and treats CSI-RS ports #1, #2 and #5 to #8 as CSI-IMs.

The user terminal measures the received power of CSI-RS port #3 as the signal power Ps1 of layer #1. The user terminal measures the received power of CSI-RS port #4 as the signal power Ps2 of layer #2.

Among CSI-RS ports #1, #2 and #5 to #8, the user terminal measures the received power of CSI-RS ports #1, #2, #5 and #6, which are NZP CSI-RS ports, as MUI power Pu. Among CSI-RS ports #2 to #8, the user terminal measures the received power of CSI-RS ports #7 and #8, which are ZP CSI-RS ports, as the sum (Pi+N) of ICI power and noise power.

Furthermore, the user terminal calculates Ps1/(Pu+Pi+N) as the SINR of layer #1 by using equation 1, and calculates Ps2/(Pu+Pi+N) as the SINR of layer #2 by using equation 1. Furthermore, the user terminal calculates a CQI based on the SINR of layer #1 and a CQI based on the SINR of layer #2, and reports these two CQIs to the radio base station.

As described above, by distinguishing between the resources to use for Ps, Pu and Pi+N, the accuracy of CSI measurement, where multi-user interference is included, can be improved.

Furthermore, the user terminal specifies the resources to use for Ps, Pu and Pi+N based on CSI-IM resources and CSI-RS resources, so that the radio base station can flexibly configure the resources for use in CSI measurement. For example, even if, the number of candidate CSI-RS resources and/or the number of candidate CSI-IM resources are limited, the radio base station can increase the types of resources for use in CSI measurement by configuring combinations of CSI-IM resources and CSI-RS resources.

(Second Example)

CSI-IM resources, according to a second example, include DMRS ports and/or ZP CSI-RS ports.

In the second example, signal measurement resources will be referred to as "PDSCH ports." PDSCH ports include at least one DMRS port for use in PDSCH transmission.

When, in a given slot, both PDSCH transmission and CSI-IM resources are configured, and, furthermore, a number of DMRS ports are included in both PDSCH ports and CSI-IM resources, a user terminal treats these DMRS ports as CSI-RSs, and treats non-CSI-RS ports in the CSI-IM resource as CSI-IMs.

The user terminal measures the received power of CSI-RSs as signal power Ps.

Among the resources specified as CSI-IMs, the DMRS ports are assigned as PDSCH ports to other users in the instant cell. Therefore, the user terminal measures the received power of DMRS ports among the CSI-IMs as interference (MUI) power Pu from other users in the instant cell.

Among the resources specified as CSI-IMs, the ZP CSI-RS ports are assigned as PDSCH ports to other cells. Therefore, the user terminal measures the received power of the ZP CSI-RS ports, among CSI-IMs as the sum (Pi+N) of the interference (ICI) power Pi and the noise power N from other cells.

The radio base station may command, by using DCI, the user terminal to measure CSI.

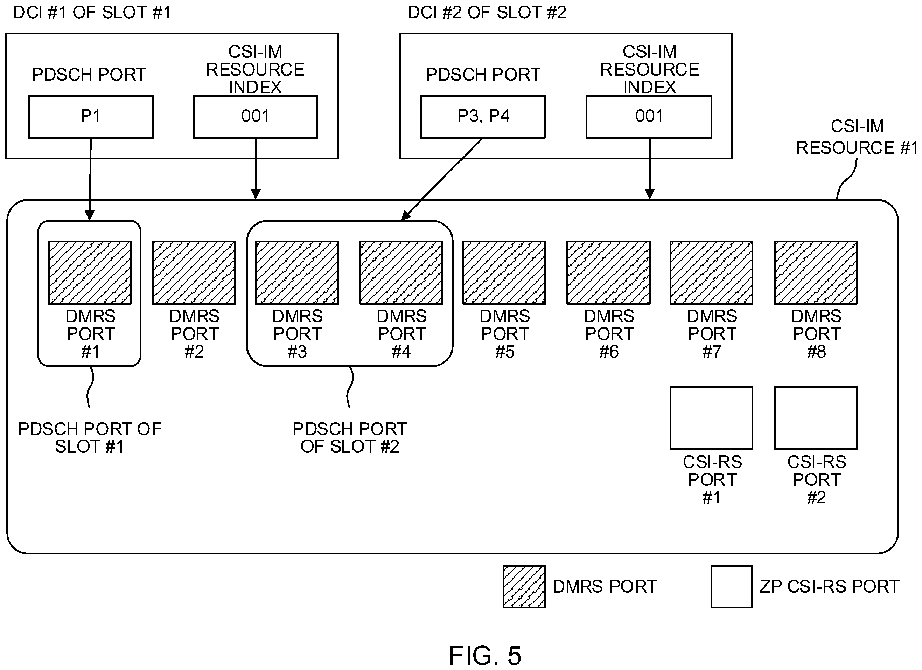

FIG. 5 is a diagram to show examples of DCIs upon the measurement of CSI according to the second example.

One field for CSI measurement may be added to an existing DCI format. For example, this field is a three-bit CSI-IM resource index that indicates one CSI-IM resource.

Prior to CSI measurement, a CSI-IM resource associated with a CSI-IM resource index may be configured in the user terminal.

When CSI measurement is conducted in a given slot, the DCI of that slot includes a CSI-IM resource index.

Also, when PDSCH transmission is performed in a given slot, the DCI of that slot includes a PDSCH port (DMRS port indication). A PDSCH port indicates a DMRS port that is compatible with PDSCH transmission. For example, DCI format 2C/2D of LTE includes indications of the antenna port (DMRS port) for use in PDSCH transmission, the scrambling ID, and the number of layers. In the event multiple layers are assigned for PDSCH transmission, the PDSCH ports indicate the DMRS ports corresponding to each layer.

CSI measurement and PDSCH transmission are performed in slot #1, so that DCI #1 of slot #1 includes a CSI-IM resource index and a PDSCH port. In DCI #1, the CSI-IM resource index indicates "001," and the PDSCH port indicates DMRS port #1. The user terminal, having receive DCI #1, specifies CSI-IM resource #1 corresponding to the CSI-IM resource index "001," and specifies DMRS port #1 as a PDSCH port.

CSI measurement and PDSCH transmission are performed in slot #2, so that DCI #2 of slot #2 includes a CSI-IM resource index and a PDSCH port. In DCI #2, the CSI-IM resource index indicates "001," and the PDSCH port indicates DMRS ports #3 and #4. The user terminal to receive DCI #2 specifies CSI-IM resource #1 corresponding to the CSI-IM resource index "001," and specifies DMRS ports #3 and #4 as PDSCH ports.

Prior to CSI measurement, the radio base station may report CSI-IM resource indications, which indicate multiple candidates for CSI-IM resources, to the user terminal, by using at least one of system information, higher layer signaling and physical layer signaling.

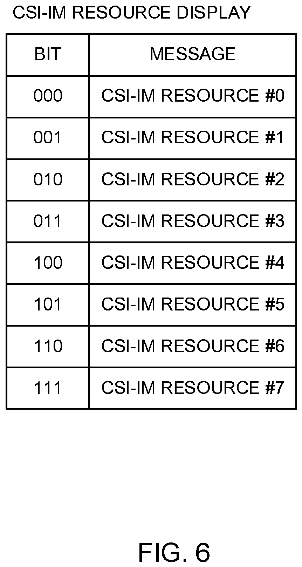

FIG. 6 is a diagram to show examples of CSI-IM resource indications.

In this drawing, the CSI-IM resource indications show multiple CSI-IM resource indices as candidate CSI-IM resource indices. The CSI-IM resource indications further show which CSI-IM resource is associated with each CSI-IM resource index.

Referring to the CSI-RS resource indications, the user terminal selects the CSI-IM resource corresponding to the CSI-IM resource index indicated by DCI.

CSI-IM resource #0 may indicate that no port is included (interference power measurement is not commanded). This allows the radio base station to command CSI measurement to measure only the signal power in a specific slot, and report the PDSCH port alone, or command CSI measurement to measure only the interference power and report the CSI-IM resource alone.

Next, the CSI measurement in FIG. 5 above will be described in detail below.

CSI-IM resource #1 includes DMRS ports #1 to #8 and CSI-RS ports #1 and #2. CSI-RS ports #1 and #2 are each a ZP CSI-RS port.

The radio base station configures the transmission of PDSCH #1 and CSI measurement in slot #1, and, using DCI #1, triggers (reports) the PDSCH port of PDSCH #1 and CSI-IM resource #1. The PDSCH port of PDSCH #1 includes DMRS port #1.

In this case, DMRS port #1 is included in both the PDSCH port of PDSCH #1 and CSI-IM resource #1, so that the user terminal treats DMRS port #1 as a CSI-RS, and treats DMRS ports #2 to #8 and CSI-RS ports #1 and #2, which are non-CSI-RS ports in the CSI-IM resource, as CSI-IMs.

The user terminal measures the received power of DMRS port #1 (the DMRS and/or the PDSCH of DMRS port #1) identified with a CSI-RS, as signal power Ps.

The user terminal measures the received power of DMRS ports #2 to #8 (the DMRSs and/or the PDSCHs of DMRS ports #2 to #8), which are DMRS ports among the ports identified with CSI-IMs, as MUI power Pu. The user terminal measures the received power of CSI-RS ports #1 and #2, which are ZP CSI-RS ports among the ports identified with CSI-IMs, as the sum (Pi+N) of ICI power and noise power.

Furthermore, the user terminal calculates $Ps/(Pu+Pi+N)$ as the SINR, by using equation 1, calculates a CQI based on the SINR, and reports the CQI to the radio base station.

Furthermore, the radio base station configures transmission of PDSCH #2 and CSI measurement in slot #2, and, using DCI #2, triggers the PDSCH port of PDSCH #2 and CSI-IM resource #1. The PDSCH port of PDSCH #2 includes DMRS port #1. DMRS ports #3 and #4 are also included. DMRS ports #3 and #4 correspond to layers #1 and #2, respectively.

In this case, DMRS ports #3 and #4 are included in both the PDSCH port of PDSCH #2 and CSI-IM resource #1, so that the user terminal treats DMRS port #2 as a CSI-RS, and treats DMRS ports #1, #2 and #5 to #8 and CSI-RS ports #1 and #2, which are non-CSI-RS ports in the CSI-IM resource, as CSI-IMs.

The user terminal measures the received power of DMRS port #3 identified with a CSI-RS, as the signal power Ps1 of layer #1. The user terminal measures the received power of DMRS port #4 identified with a CSI-RS, as the signal power Ps2 of layer #2.

The user terminal measures the received power of DMRS ports #1, #2, and #5 to #8, which are DMRS ports among the ports identified with CSI-IMs, as MUI power Pu. The user terminal measures the received power of CSI-RS ports #1 and #2, which are ZP CSI-RS ports among the ports identified with CSI-IMs, as the sum (Pi+N) of ICI power and noise power.

This enables the user terminal to measure the signal power Ps1 and Ps2 using CSI-RSs, and measure interference-plus-noise power Pu+Pi+N using CSI-IMs.

Furthermore, the user terminal calculates $Ps1/(Pu+Pi+N)$ as the SINR of layer #1 by using equation 1, and calculates $Ps2/(Pu+Pi+N)$ as the SINR of layer #2 by using equation 1. Furthermore, the user terminal calculates the CQI of layer #1, which is based on the SINR of layer #1, and the CQI of layer #2, which is based on the SINR of layer #2, and reports these two CQIs to the radio base station.

The user terminal can measure the actual MUI by measuring CSI using the DMRSs and/or PDSCHs received at the DMRS ports, so that the accuracy of CSI measurement can be improved.

By including DMRS ports in CSI-IM resources, it is no longer necessary to allocate resources to the reference signals (for example, CSI-RS) that are used only in CSI measurement, so that the resource utilization efficiency can be improved.

(Third Example)

A third example of the present invention uses the same CSI-RS resources and CSI-IM resources as in the first example, but the method of reporting CSI-RS resources is different. In the third example, it is not necessary to configure multiple candidates for CSI-RS resources in a user terminal before CSI measurement. Alternatively, only a plurality of candidates for CSI-IM resources may be configured in the user terminal. In this case, the radio base station may report the ports included in CSI-RS resources by using DCI.

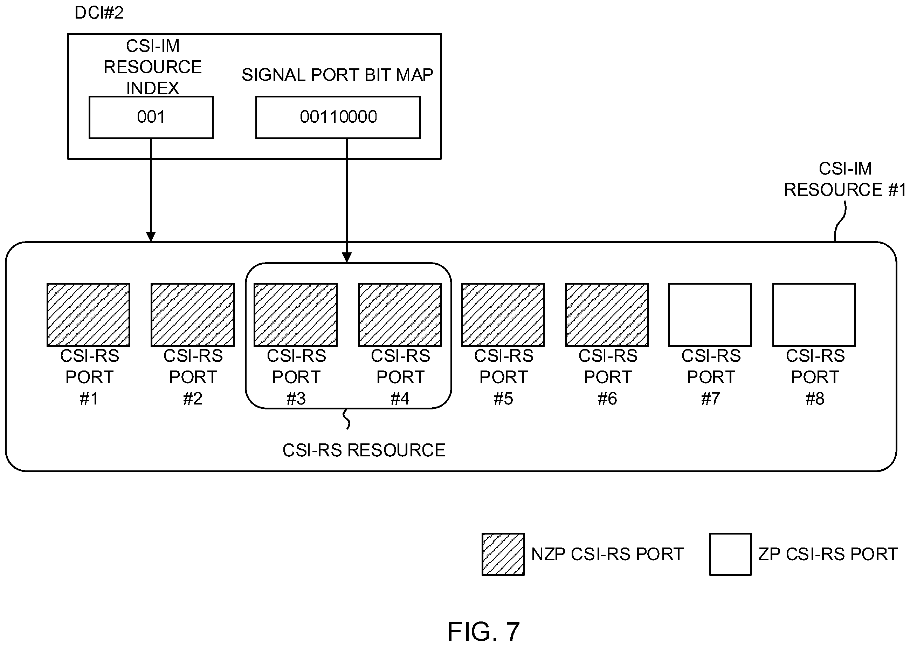

FIG. 7 is a diagram to show examples of DCIs upon the measurement of CSI according to the third example of the present invention.

Two fields for CSI measurement may be added to an existing DCI format. The two fields are, for example, a three-bit CSI-IM resource index to indicate CSI-IM resources, and an N-bit signal port bitmap to indicate CSI-RS resources. N is the maximum number of ports in one CSI-IM resource, for example. The bit positions in the signal port bitmap may correspond to each port in CSI-IM resources. In the signal port bitmap, the bits corresponding to the ports included in CSI-RS resources may be configured to "1," and the other bits may be configured to "0."

When CSI measurement is commanded in a given slot, the DCI of that slot includes a CSI-IM resource index. Also, when CSI measurement to measure signal power is commanded in a given slot, the DCI of that slot includes a CSI-IM resource index and a signal port bitmap.

CSI measurement to measure signal power is commanded in a specific slot, so that DCI #2 of this slot includes a CSI-IM resource index and a signal port bitmap. In DCI #2, the CSI-IM resource index is "001," and the signal port bitmap is "00110000." Upon receiving DCI #2, the user terminal specifies CSI-IM resource #1 corresponding to the CSI-IM resource index "001." Furthermore, since the bit positions of "1" in the signal port bitmap are the third bit and the fourth bit, the user terminal specifies CSI-RS ports #3 and #4 as CSI-RS resources.

In this way, DCI shows which ports are included in CSI-RS resources, so that the radio base station can dynamically change the ports included in CSI-RS resources.

As in the first example, before CSI measurement, multiple candidates for CSI-RS resources may be configured in the user terminal. In this case, the radio base station may report different CSI-RS resources than the configured multiple candidates, by using DCI.

As in the third example, PDSCH ports in the second example may be reported using a signal port bitmap.

(Fourth Example)

In a fourth example of the present invention, UE and a radio base station support, as time-domain operations, at least one of aperiodic interference measurement, semi-persistent interference measurement, and periodic interference measurement.

For interference measurement resources based on ZP CSI-RSs, these different time-domain operations may be configured in the UE based on the configuration of interference measurement resources.

For example, the UE and the radio base stations may support ZP CSI-RS-based semi-persistent interference measurement resources for CSI feedback and interference measurement.

The radio base station dynamically reports triggering, activation, and deactivation for ZP CSI-RSs to the UE as in the reporting method for NZP CSI-RSs. For example, for activation and deactivation, the combination of RRC signaling and MAC CE (Medium Access Control Element) or the combination of RRC signaling and DCI may be used. For example, for triggering, the combination of RRC signaling and MAC CE and DCI, or the combination of RRC signaling and DCI may be used.

NZP CSI-RS resources for channel measurement may be referred to as "channel measurement resources." ZP CSI-RS resources for interference measurement may be referred to as "interference measurement resources."

The UE and the radio base station may support the combination of periodic channel measurement resources and periodic interference measurement resources for periodic CSI reporting (see Table 1).

The UE and the radio base station may at least support the combination of periodic channel measurement resources or semi-persistent channel measurement resources with periodic interference measurement resources or semi-persistent interference measurement resources for semi-persistent CSI reporting (see Table 2).

The UE and the radio base station may at least support the combination of periodic channel measurement resources, semi-persistent channel measurement resources or aperiodic channel measurement resources, with periodic interference measurement resources, semi-persistent interference measurement resources, or aperiodic interference measurement resources, for aperiodic CSI reporting (see Table 3).

The interference measurement resource configuration based on ZP CSI-RSs may be configured as an RE pattern in one PRB. One or more RE patterns among the following multiple candidates may be supported.

For contiguous ZP CSI-RSs in an RE pattern, the number of subcarriers that neighbor each other (neighboring subcarriers) is represented by y, and the number of symbols that neighbor each other (neighboring symbols) is represented by z.

Referring to drawings showing the following RE patterns, examples will be shown in which a DL control channel is allocated to the first symbol and the second symbol in a slot, but the DL control channel may be allocated to other symbols in the slot as well. Also, although examples will be shown in which ZP CSI-RS is allocated to symbols immediately after the DL control channel, the DL control channel may be allocated to other symbols.

Different interference measurement resources may be time-multiplexed, frequency-multiplexed, and/or space-multiplexed. Different interference measurement resources may be configured for different layers (or APs).

An RE pattern (first candidate) may be comprised of two REs with two neighboring subcarriers. That is, a ZP CSI-RS is allocated to resources $((y, z) = (2, 1))$ of two subcarriers in the frequency domain and one symbol in the time domain.

An RE pattern (second candidate) may be comprised of four REs with two neighboring subcarriers and two neighboring symbols. That is, a ZP CSI-RS is allocated to resources $((y, z) = (2, 2))$ of two subcarriers in the frequency domain and two symbols in the time domain.

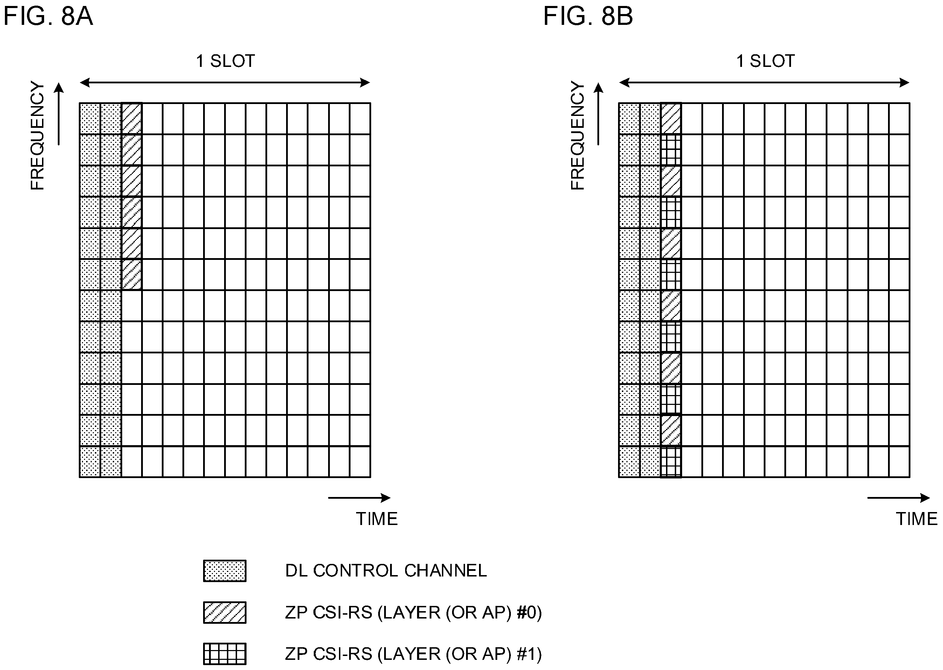

As shown in FIG. 8A, an RE pattern (third candidate) may be comprised of six REs with six neighboring subcarriers. That is, a ZP CSI-RS is allocated to resources $((y, z) = (6, 1))$ of six subcarriers in the frequency domain and one symbol in the time domain.

As shown in FIG. 8B, similar to the frequency-domain and time-domain allocation in one symbol in DMRS configuration type 1, an RE pattern (fourth candidate) may be comprised of six REs with comb 2 in the subcarrier domain. In other words, an RE pattern has, between REs in which a ZP CSI-RS is allocated, one subcarrier (gap subcarrier) in which no ZP CSI-RS is allocated.

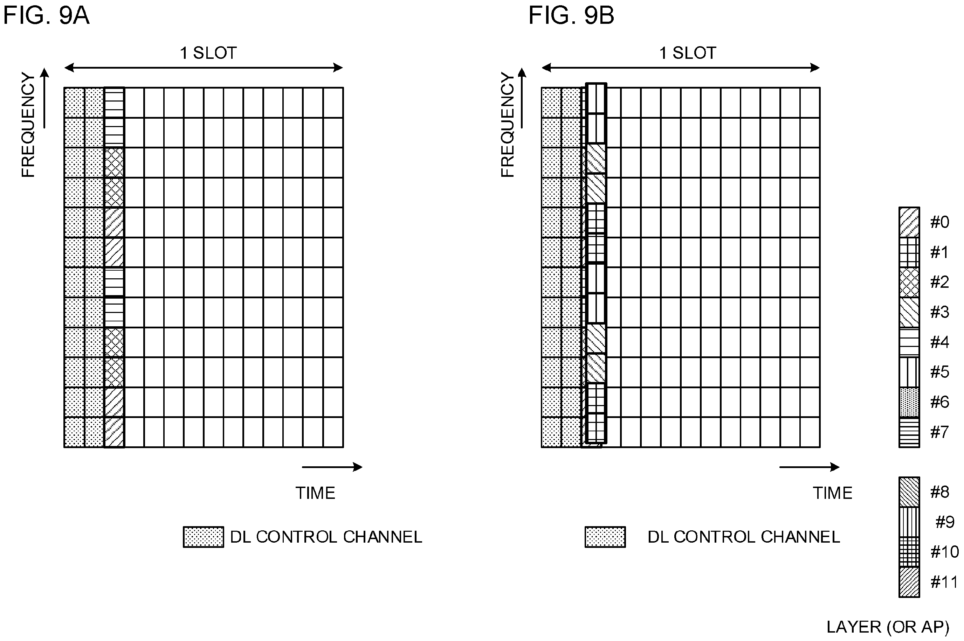

As shown in FIG. 9A, similar to the frequency-domain and time-domain allocation in one symbol in DMRS configuration type 2, an RE pattern (fifth candidate) may be comprised of two sets of two neighboring subcarriers, with four gap subcarriers between the two sets. Multiple interference measurement resources may be frequency-multiplexed. Where there is a gap subcarrier in one interference measurement resource, another interference measurement resource may be allocated. As shown in FIG. 9B, multiple interference measurement resources may be frequency-multiplexed and space-multiplexed. The number of gap subcarriers may be other than four.

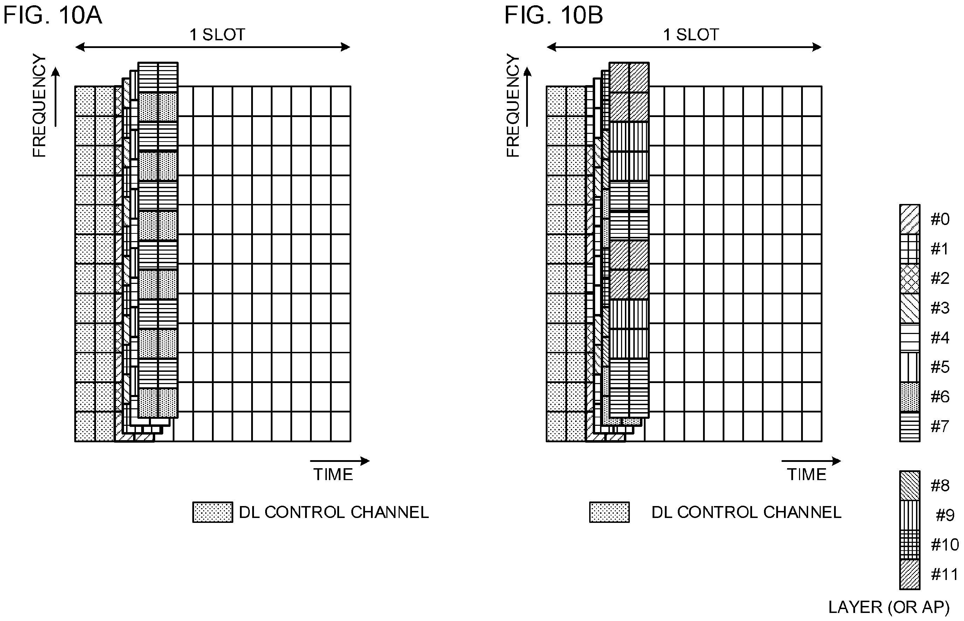

As shown in FIG. 10A, similar to the frequency-domain and time-domain allocation in two symbols in DMRS configuration type 1, an RE pattern (sixth candidate) may be comprised of twelve REs with comb 2 in the subcarrier domain. In other words, in this RE pattern, the RE pattern of the fourth candidate is allocated to two neighboring symbols. As shown in this drawing, multiple interference measurement resources may be frequency-multiplexed and space-multiplexed.

As shown in FIG. 10B, similar to the frequency-domain and time-domain allocation in two symbols in DMRS configuration type 2, an RE pattern (seventh candidate) may be comprised of two sets of two neighboring subcarriers and two neighboring symbols, possibly with four gap subcarriers between the two sets. In other words, in this RE pattern, the RE pattern of the fifth candidate is allocated to two neighboring symbols. As shown in this drawing, multiple interference measurement resources may be frequency-multiplexed and space-multiplexed.

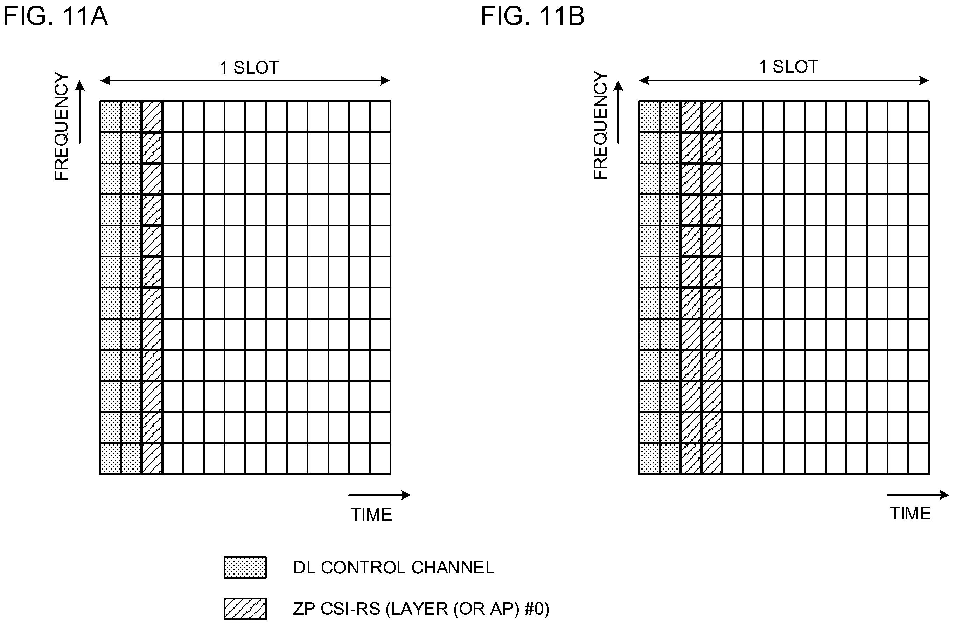

As shown in FIG. 11A, an RE pattern (eighth candidate) may be comprised of twelve REs with twelve neighboring subcarriers. That is, interference measurement resources are allocated to resources $((y, z) = (12, 1))$ of twelve contiguous subcarriers in the frequency domain and one symbol in the time domain.

As shown in FIG. 11B, an RE pattern (ninth candidate) may be comprised of 24 REs with twelve neighboring subcarriers and two neighboring symbols. That is, a ZP CSI-RS is allocated to resources $((y, z)=(12, 2))$ of twelve contiguous subcarriers in the frequency domain and two contiguous symbols in the time domain.

In the event multiple RE patterns are supported, RE patterns may be configured from the radio base station (network) to the UE.

In the event one RE pattern is supported, the RE pattern may be used on a fixed basis. The RE pattern in this case may be defined in the specification.

One fixed RB-level frequency density may be used. That is, the same RE allocation may be applied to all PRBs for interference measurement resources.

A plurality of unit resources may be configured as interference measurement resources, with an RE pattern configured in one unit resource. The unit resources may be one PRB and one symbol, or may be at least one PRB and at least one symbol.

For ZP CSI-RS-based interference measurement resources, at least one of the following parameters (configuration information) may be configured by way of RRC signaling.

A parameter may indicate an operation in the time domain. For example, the time-domain operation might pertain to a periodic ZP CSI-RS, a semi-persistent ZP CSI-RS, or an aperiodic ZP CSI-RS.

For a periodic ZP CSI-RS or a semi-persistent ZP CSI-RS, a parameter may indicate the period and/or the slot offset. The slot offset may indicate the location where the interference measurement resource starts.

A parameters may indicate the band configuration. The band configuration may be, for example, BWP (Bandwidth Part) information or a partial band in the BWP.

Envisaging future radio communication systems (for example, NR, 5G or 5G+), research is underway to allocate a carrier (also referred to as "component carrier (CC)," "system band," etc.) having a wider bandwidth (for example, 100 to 400 MHz) than in existing LTE systems (for example, LTE Rel. 8 to 13). Also, studies are underway to semi-statically configure one or more frequency bands in the carrier to a user terminal. Each frequency band in the carrier is also referred to as "BWP."

When multiple RE patterns are supported, a parameter may indicate an RE pattern in one PRB.

Also, a parameter may indicate a DMRS port and/or a ZP CSI-RS port.

The radio base station configures interference measurement resources in the UE by using RE patterns, so that the overhead of reporting interference measurement resources can be reduced.

Interference measurement resources may be configured apart from the configuration of DMRS patterns, or the configurations of DMRS patterns may be used. By using DMRS patterns to configure interference measurement resources, it is possible to reduce the overhead of the measurement of interference and the configuration of DMRS.

(Radio Communication System)

Now, the structure of a radio communication system according to one embodiment of the present invention will be described below. In this radio communication system, communication is performed using one of the radio communication methods according to the herein-contained embodiments of the present invention, or a combination of these.

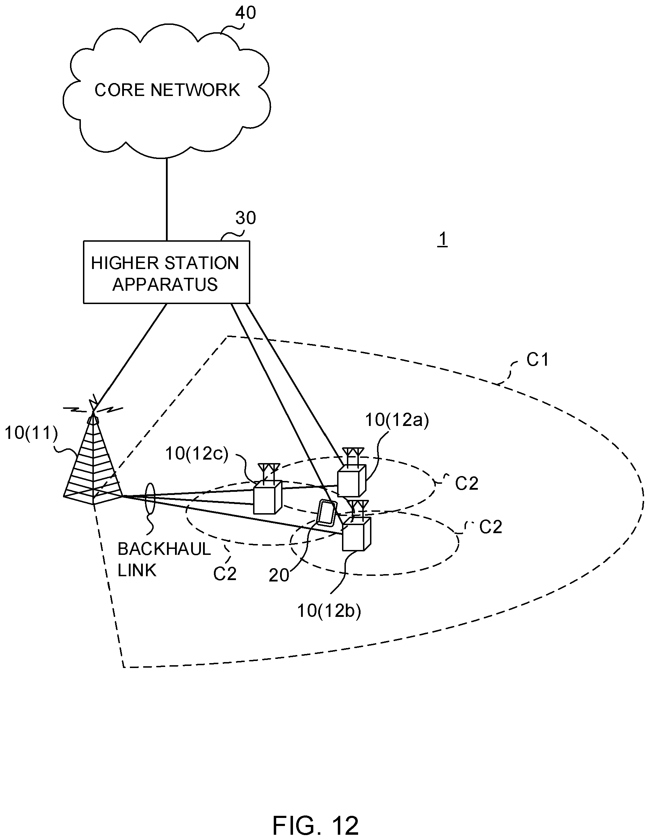

FIG. 12 is a diagram to show an exemplary schematic structure of a radio communication system according to one embodiment of the present invention. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th Generation mobile communication system)," "5G (5th Generation mobile communication system)," "FRA (Future Radio Access)," "New-RAT (Radio Access Technology)" and so on, or may be seen as a system to implement these.

The radio communication system 1 includes a radio base station 11 that forms a macro cell C1, with a relatively wide coverage, and radio base stations 12a to 12c that are placed within the macro cell C1 and that form small cells C2, which are narrower than the macro cell C1. Also, user terminals 20 are placed in the macro cell C1 and in each small cell C2. The arrangements of cells and user terminals 20 are not limited to those illustrated in the drawings.

The user terminals 20 can connect with both the radio base station 11 and the radio base stations 12. The user terminals 20 may use the macro cell C1 and the small cells C2 at the same time by means of CA or DC. Furthermore, the user terminals 20 may apply CA or DC using a plurality of cells (CCs) (for example, five or fewer CCs or six or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the structure of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals (mobile stations) or stationary communication terminals (fixed stations).

In the radio communication system 1, as radio access schemes, OFDMA (Orthogonal Frequency Division Multiple Access) is applied to the downlink and SC-FDMA (Single-Carrier Frequency Division Multiple Access) is applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combinations of these, and other radio access schemes may be used as well.

In the radio communication system 1, a downlink shared channel (PDSCH (Physical Downlink Shared CHannel)), which is used by each user terminal 20 on a shared basis, a broadcast channel (PBCH (Physical Broadcast CHannel)), downlink L1/L2 control channels and so on are used as downlink channels. User data, higher layer control information, SIBs (System Information Blocks) and so on are communicated in the PDSCH. Also, the MIB (Master Information Block) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. HARQ (Hybrid Automatic Repeat reQuest) delivery acknowledgment information (also referred to as, for example, "retransmission control information," "HARQ-ACK," "ACK/NACK," and so forth) in response to the PUSCH is communicated by the PHICH. The EPDCCH is frequency-division-multiplexed with the PDSCH (downlink shared data channel) and used to communicate DCI and so on, like the PDCCH.

In the radio communication system 1, an uplink shared channel (PUSCH (Physical Uplink Shared CHannel)), which is used by each user terminal 20 on a shared basis, an uplink control channel (PUCCH (Physical Uplink Control CHannel)), a random access channel (PRACH (Physical Random Access CHannel)) and so on are used as uplink channels. User data, higher layer control information and so on are communicated by the PUSCH. Also, downlink radio quality information (CQI (Channel Quality Indicator)), delivery acknowledgment information and so on are communicated by the PUCCH. By means of the PRACH, random access preambles for establishing connections with cells are communicated.

In the radio communication system 1, cell-specific reference signals (CRSs), channel state information reference signals (CSI-RSs), demodulation reference signals (DMRSs), positioning reference signals (PRSs) and so on are communicated as downlink reference signals. Also, in the radio communication system 1, measurement reference signals (SRS (Sounding Reference Signal)), demodulation reference signal (DMRS) and so on are communicated as uplink reference signals. Note that the DMRS may be referred to as a "user terminal-specific reference signal (UE-specific Reference Signal)." Also, the reference signals to be communicated are by no means limited to these.

(Radio Base Station)

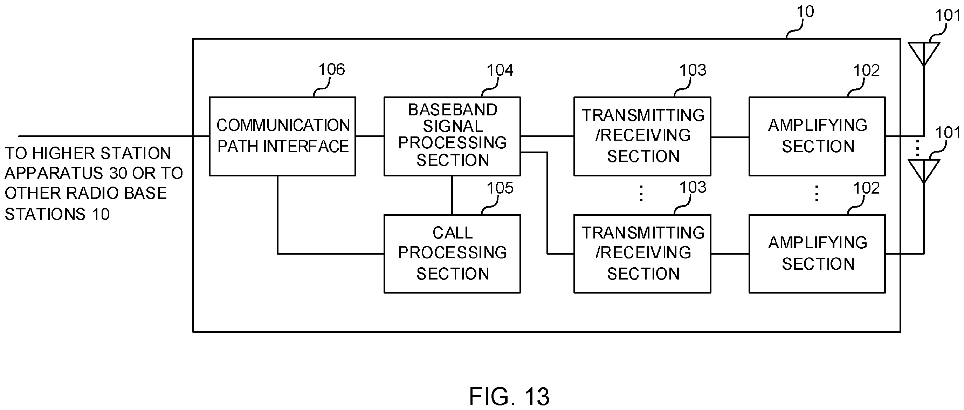

FIG. 13 is a diagram to show an exemplary overall structure of a radio base station according to one embodiment of the present invention. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing of communication channels (such as setting up and releasing communication channels), manages the state of the radio base stations 10 and manages the radio resources.

The communication path interface section 106 transmits and receives signals to and from the higher station apparatus 30 via a predetermined interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

The transmitting/receiving sections 103 may transmit information related to interference measurement resources, including a combination of multiple ports and/or channels. The transmitting/receiving sections 103 may transmit information related to signal measurement resources, including at least one port and/or channel in the interference measurement resources.

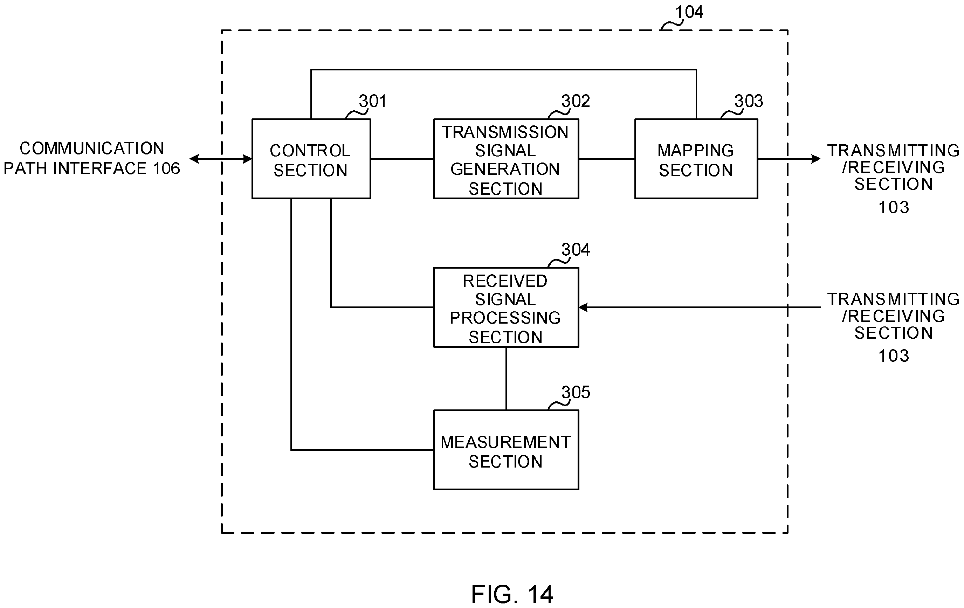

FIG. 14 is a diagram to show an exemplary functional structure of a radio base station according to one embodiment of the present invention. Note that, although this example primarily shows functional blocks that pertain to characteristic parts of the present embodiment, the radio base station 10 has other functional blocks that are necessary for radio communication as well.

The baseband signal processing section 104 at least has a control section (scheduler) 301, a transmission signal generation section 302, a mapping section 303, a received signal processing section 304 and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be constituted by a controller, a control circuit or control apparatus that can be described based on general understanding of the technical field to which the present invention pertains.

The control section 301 controls, for example, the generation of signals in the transmission signal generation section 302, the allocation of signals by the mapping section 303 and so on. Furthermore, the control section 301 controls the signal receiving processes in the received signal processing section 304, the measurement of signals in the measurement section 305, and so on.

The control section 301 controls the scheduling (for example, resource allocation) of system information, downlink data signals (for example, signals transmitted in the PDSCH) and downlink control signals (for example, signals transmitted in the PDCCH and/or the EPDCCH). Also, the control section 301 controls the generation of downlink control signals (for example, delivery acknowledgement information), downlink data signals and so on, based on the results of deciding whether or not retransmission control is necessary for uplink data signals, and so on. Also, the control section 301 controls the scheduling of synchronization signals (for example, PSS (Primary Synchronization Signal)/SSS (Secondary Synchronization Signal)), downlink reference signals (for example, CRS, CSI-RS, DMRS, etc.) and so on.

In addition, the control section 301 controls the scheduling of uplink data signals (for example, signals transmitted in the PUSCH), uplink control signals (for example, signals transmitted in the PUCCH and/or the PUSCH), random access preambles transmitted in the PRACH, uplink reference signals, and so on.

Also, the control section 301 may allocate interference measurement resources. Also, the control section 301 may allocate signal measurement resources. The signal measurement resources may be the ports and/or channels assigned to DL signals for a user terminal. Resources other than the signal measurement resources in the interference measurement resources may include the ports and/or channels assigned to DL signals for other user terminals.

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit or signal generating apparatus that can be described based on general understanding of the technical field to which the present invention pertains.

For example, the transmission signal generation section 302 generates DL assignments, which report downlink signal allocation information, and UL grants, which report uplink signal allocation information, based on commands from the control section 301. Also, the downlink data signals are subjected to the coding process, the modulation process and so on, by using coding rates and modulation schemes that are selected based on, for example, channel state information (CSI) from each user terminal 20.

The mapping section 303 maps the downlink signals generated in the transmission signal generation section 302 to predetermined radio resources based on commands from the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminal 20 (uplink control signals, uplink data signals, uplink reference signals, etc.). For the received signal processing section 304, a signal processor, a signal processing circuit or signal processing apparatus that can be described based on general understanding of the technical field to which the present invention pertains can be used.

The received signal processing section 304 outputs the decoded information, acquired through the receiving processes, to the control section 301. For example, when a PUCCH to contain an HARQ-ACK is received, the received signal processing section 304 outputs this HARQ-ACK to the control section 301. Also, the received signal processing section 304 outputs the received signals and/or the signals after the receiving processes to the measurement section 305.

The measurement section 305 conducts measurements with respect to the received signal. The measurement section 305 can be constituted by a measurer, a measurement circuit or measurement apparatus that can be described based on general understanding of the technical field to which the present invention pertains.

For example, the measurement section 305 may perform RRM (Radio Resource Management) measurements, CSI (Channel State Information) measurements, and so on, based on the received signals. The measurement section 305 may measure the received power (for example, RSRP (Reference Signal Received Power)), the received quality (for example, RSRQ (Reference Signal Received Quality), the SINR (Signal to Interference plus Noise Ratio)), the signal strength (for example, RSSI (Received Signal Strength Indicator)), uplink transmission path information (for example, CSI) and so on. The measurement results may be output to the control section 301.

(User Terminal)

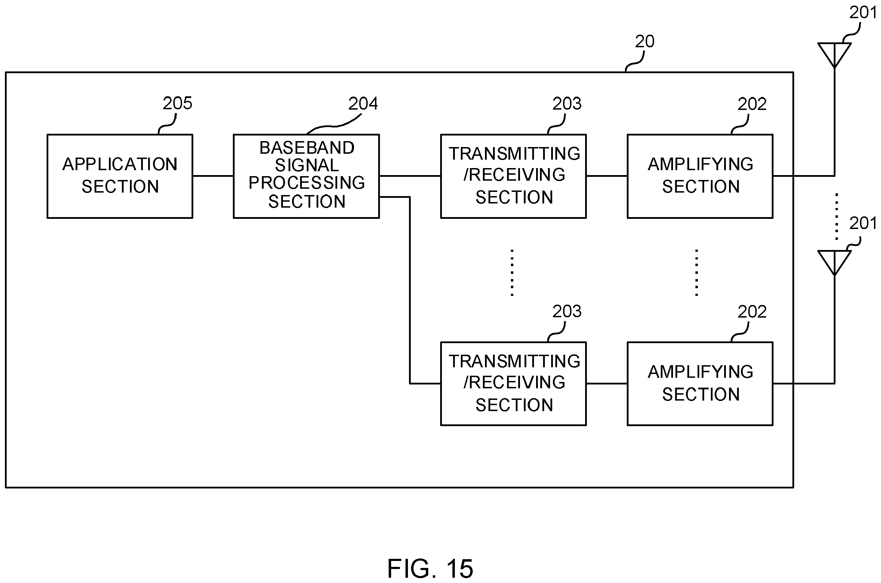

FIG. 15 is a diagram to show an exemplary overall structure of a user terminal according to one embodiment of the present invention. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. A transmitting/receiving section 203 can be constituted by a transmitters/receiver, a transmitting/receiving circuit or transmitting/receiving apparatus that can be described based on general understanding of the technical field to which the present invention pertains. Note that a transmitting/receiving section 203 may be structured as a transmitting/receiving section in one entity, or may be constituted by a transmitting section and a receiving section.

The baseband signal processing section 204 performs, for the baseband signal that is input, an FFT process, error correction decoding, a retransmission control receiving process and so on. Downlink user data is forwarded to the application section 205. The application section 205 performs processes related to higher layers above the physical layer and the MAC layer, and so on. Also, in the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving sections 203. Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

Also, the transmitting/receiving sections 203 may receive DL signals. In addition, the transmitting/receiving sections 203 may receive information related to interference measurement resources, including a combination of multiple ports and/or channels. In addition, the transmitting/receiving sections 203 may receive information related to signal measurement resources, including at least one port and/or channel in the interference measurement resources. In addition, the transmitting/receiving sections 203 may receive information related to the interference measurement resource for a specific period and information related to the signal measurement resource for a specific period. Also, the transmitting/receiving sections 203 may receive DL control information including information related to the interference measurement resource for a specific period and information related to the signal measurement resource for a specific period.

Furthermore, the transmitting/receiving sections 203 may receive configuration information (for example, a parameter) that indicates the allocation of interference measurement resources (for example, an RE pattern) in unit resources (for example, one PRB and one symbol).

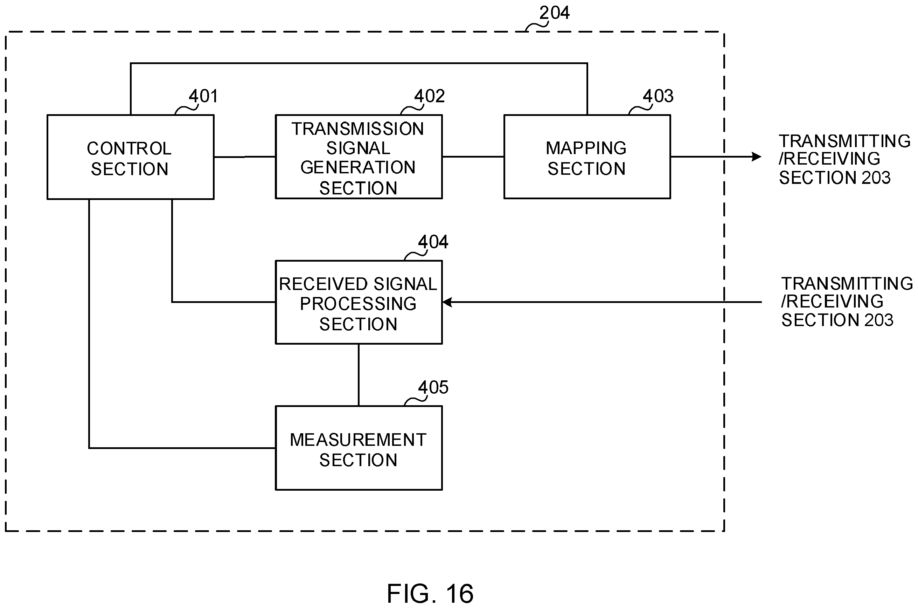

FIG. 16 is a diagram to show an exemplary functional structure of a user terminal according to one embodiment of the present invention. Note that, although this example primarily shows functional blocks that pertain to characteristic parts of the present embodiment, the user terminal 20 has other functional blocks that are necessary for radio communication as well.

The baseband signal processing section 204 provided in the user terminal 20 at least has a control section 401, a transmission signal generation section 402, a mapping section 403, a received signal processing section 404 and a measurement section 405. Note that these configurations have only to be included in the user terminal 20, and some or all of these configurations may not be included in the baseband signal processing section 204.

The control section 401 controls the whole of the user terminal 20. For the control section 401, a controller, a control circuit or control apparatus that can be described based on general understanding of the technical field to which the present invention pertains can be used.

The control section 401, for example, controls the generation of signals in the transmission signal generation section 402, the allocation of signals by the mapping section 403, and so on. Furthermore, the control section 401 controls the signal receiving processes in the received signal processing section 404, the measurement of signals in the measurement section 405, and so on.

The control section 401 acquires downlink control signals (for example, signals transmitted in the PDCCH/EPDCCH) and downlink data signals (for example, signals transmitted in the PDSCH) transmitted from the radio base station 10, via the received signal processing section 404. The control section 401 controls the generation of uplink control signals (for example, delivery acknowledgement information) and/or uplink data signals based on the results of deciding whether or not retransmission control is necessary for the downlink control signals and/or downlink data signals, and so on.

Furthermore, the control section 401 may control the measurement of DL signals. In addition, the control section 401 may control the measurement of DL signals based on information related to interference measurement resources (for example, configuration information, parameters, etc.). Furthermore, the control section 401 may control the measurement of signal power based on DL signals in signal measurement resources. Also, when the user terminal 20 receives information related to the interference measurement resource for a specific period and the signal measurement resource for a specific period, the control section 401 may control the measurement of interference power based on DL signals of resources other than the signal measurement resources in the interference measurement resources. Furthermore, the control section 401 may control the measurement of interference power from other user terminals in the instant cell based on DL signals of resources allocated to a predetermined reference signal, among the resources other than the signal measurement resources in the interference measurement resources.

Furthermore, the control section 401 may control the measurement of DL signals based on configuration information (for example, parameters, RE patterns, etc.). The allocation of interference measurement resources may be based on the allocation of a demodulation reference signal (for example, DMRS). The configuration information may indicate one of periodic interference measurement resources, semi-persistent interference measurement resources, and aperiodic interference measurement resources. An interference measurement resource may be time-multiplexed, frequency-multiplexed and/or space-multiplexed with other interference measurement resources. The configuration information may indicate one of a plurality of candidates for the allocation of interference measurement resources (for example, RE patterns).

The transmission signal generation section 402 generates uplink signals (uplink control signals, uplink data signals, uplink reference signals, etc.) based on commands from the control section 401, and outputs these signals to the mapping section 403. The transmission signal generation section 402 can be constituted by a signal generator, a signal generating circuit or signal generating apparatus that can be described based on general understanding of the technical field to which the present invention pertains.

For example, the transmission signal generation section 402 generates uplink control signals related to delivery acknowledgement information and/or channel state information (CSI) based on commands from the control section 401. Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal.

The mapping section 403 maps the uplink signals generated in the transmission signal generation section 402 to radio resources based on commands from the control section 401, and outputs the result to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The received signal processing section 404 outputs the decoded information that is acquired through the receiving processes to the control section 401. The received signal processing section 404 outputs, for example, broadcast information, system information, RRC signaling, DCI and so on, to the control section 401. Also, the received signal processing section 404 outputs the received signals and/or the signals after the receiving processes to the measurement section 405.

The measurement section 405 conducts measurements with respect to the received signals. For example, the measurement section 405 performs measurements using downlink reference signals transmitted from the radio base station 10. The measurement section 405 can be constituted by a measurer, a measurement circuit or measurement apparatus that can be described based on general understanding of the technical field to which the present invention pertains.

For example, the measurement section 405 may perform RRM measurements, CSI measurements, and so on, based on the received signals. The measurement section 405 may measure the received power (for example, RSRP), the received quality (for example, RSRQ, SINR, etc.), the signal strength (for example, RSSI), downlink transmission path information (for example, CSI), and so on. The measurement results may be output to the control section 401.

(Hardware Structure)

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire or wireless, for example) and using these multiple pieces of apparatus.

For example, the radio base station, user terminals and so on according to one embodiment of the present invention may function as a computer that executes the processes of the radio communication method of the present invention.

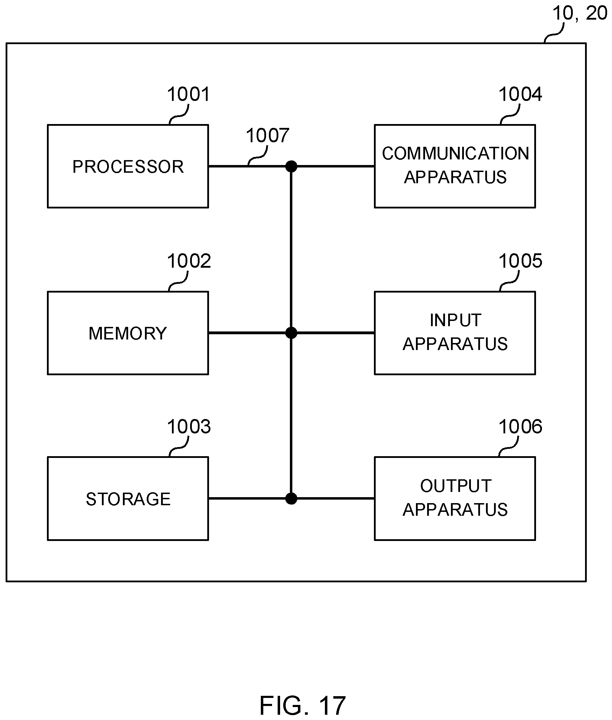

FIG. 17 is a diagram to show an exemplary hardware structure of a radio base station and a user terminal according to one embodiment of the present invention. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented in sequence, or in different manners, on one or more processors. Note that the processor 1001 may be implemented with one or more chips.

Each function of the radio base station 10 and the user terminal 20 is implemented by reading predetermined software (program) on hardware such as the processor 1001 and the memory 1002, and by controlling the calculations in the processor 1001, the communication in the communication apparatus 1004, and the reading and/or writing of data in the memory 1002 and the storage 1003.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules, data and so forth from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory" (primary storage apparatus) and so on. The memory 1002 can store executable programs (program codes), software modules and so on for implementing the radio communication methods according to embodiments of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM)) and so on), a digital versatile disc, a Blu-ray (registered trademark) disk, a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

(Variations)

Note that the terminology used in this specification and the terminology that is needed to understand this specification may be replaced by other terms that convey the same or similar meanings. For example, "channels" and/or "symbols" may be replaced by "signals" (or "signaling"). Also, "signals" may be "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or more slots in the time domain. A subframe may be a fixed time duration (for example, 1 ms) not dependent on the numerology.

Furthermore, a slot may be comprised of one or more symbols in the time domain (OFDM (Orthogonal Frequency Division Multiplexing) symbols, SC-FDMA (Single Carrier Frequency Division Multiple Access) symbols, and so on). Also, a slot may be a time unit based on numerology. Also, a slot may include a plurality of minislots. Each minislot may consist of one or more symbols in the time domain. Also, a minislot may be referred to as a "subslot."

A radio frame, a subframe, a slot, a minislot and a symbol all represent the time unit in signal communication. A radio frame, a subframe, a slot, a minislot and a symbol may be each called by other applicable names. For example, one subframe may be referred to as a "transmission time interval (TTI)," or a plurality of consecutive subframes may be referred to as a "TTI," or one slot or minislot may be referred to as a "TTI." That is, a subframe and/or a TTI may be a subframe (1 ms) in existing LTE, may be a shorter period than 1 ms (for example, one to thirteen symbols), or may be a longer period of time than 1 ms. Note that the unit to represent the TTI may be referred to as a "slot," a "minislot" and so on, instead of a "subframe."

Here, a TTI refers to the minimum time unit of scheduling in radio communication, for example. For example, in LTE systems, a radio base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks and/or codewords, or may be the unit of processing in scheduling, link adaptation and so on. Note that, when a TTI is given, the period of time (for example, the number of symbols) in which transport blocks, code blocks and/or codewords are actually mapped may be shorter than the TTI.

Note that, when one slot or one minislot is referred to as a "TTI," one or more TTIs (that is, one or multiple slots or one or more minislots) may be the minimum time unit of scheduling. Also, the number of slots (the number of minislots) to constitute this minimum time unit of scheduling may be controlled.

A TTI having a time length of 1 ms may be referred to as a "normal TTI (TTI in LTE Rel. 8 to 12)," a "long TTI," a "normal subframe," a "long subframe," and so on. A TTI that is shorter than a normal TTI may be referred to as a "shortened TTI," a "short TTI," "a partial TTI" (or a "fractional TTI"), a "shortened subframe," a "short subframe," a "minislot," "a sub-slot" and so on.

Note that a long TTI (for example, a normal TTI, a subframe, etc.) may be replaced with a TTI having a time duration exceeding 1 ms, and a short TTI (for example, a shortened TTI) may be replaced with a TTI having a TTI length less than the TTI length of a long TTI and not less than 1 ms.

A resource block (RB) is the unit of resource allocation in the time domain and the frequency domain, and may include one or a plurality of consecutive subcarriers in the frequency domain. Also, an RB may include one or more symbols in the time domain, and may be one slot, one minislot, one subframe or one TTI in length. one TTI and one subframe each may be comprised of one or more resource blocks. Note that one or more RBs may be referred to as a "physical resource block (PRB (Physical RB))," a "subcarrier group (SCG)," a "resource element group (REG)," a "PRB pair," an "RB pair" and so on.

Furthermore, a resource block may be comprised of one or more resource elements (REs). For example, one RE may be a radio resource field of one subcarrier and one symbol.

Note that the structures of radio frames, subframes, slots, minislots, symbols and so on described above are merely examples. For example, configurations pertaining to the number of subframes included in a radio frame, the number of slots included in a subframe, the number of minislots included in a slot, the number of symbols and RBs included in a slot or a minislot, the number of subcarriers included in an RB, the number of symbols in a TTI, the symbol duration, the length of cyclic prefixes (CPs) and so on can be variously changed.

Also, the information and parameters described in this specification may be represented in absolute values or in relative values with respect to predetermined values, or may be represented in other equivalent information formats. For example, radio resources may be specified by predetermined indices. In addition, equations to use these parameters and so on may be used, apart from those explicitly disclosed in this specification.

The names used for parameters and so on in this specification are in no respect limiting. For example, since various channels (PUCCH (Physical Uplink Control Channel), PDCCH (Physical Downlink Control Channel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and/or output via a plurality of network nodes.

The information, signals and so on that are input and/or output may be stored in a specific location (for example, a memory), or may be managed using a management table. The information, signals and so on to be input and/or output can be overwritten, updated or appended. The information, signals and so on that are output may be deleted. The information, signals and so on that are input may be transmitted to other pieces of apparatus.

Reporting of information is by no means limited to the examples/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (by, for example, not reporting this piece of information or by reporting other pieces of information).

Decisions may be made in values represented by one bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each example/embodiment of the present invention may be applied to a configuration in which communication between a radio base station and a user terminal is replaced with communication among a plurality of user terminals (D2D (Device-to-Device)). In this case, user terminals 20 may have the functions of the radio base stations 10 described above. In addition, terms such as "uplink" and "downlink" may be interpreted as "side." For example, an "uplink channel" may be interpreted as a "side channel."

Likewise, the user terminals in this specification may be interpreted as radio base stations. In this case, the radio base stations 10 may have the functions of the user terminals 20 described above.

Certain actions which have been described in this specification to be performed by base stations may, in some cases, be performed by higher nodes (upper nodes). In a network comprised of one or more network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The examples/embodiments illustrated in this specification may be used individually or in combinations, which may be switched depending on the mode of implementation. The order of processes, sequences, flowcharts and so on that have been used to describe the examples/embodiments herein may be re-ordered as long as inconsistencies do not arise. For example, although various methods have been illustrated in this specification with various components of steps in exemplary orders, the specific orders that are illustrated herein are by no means limiting.

The examples/embodiments illustrated in this specification may be applied to systems that use LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark) and other adequate radio communication methods, and/or next-generation systems that are enhanced based on these.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used only for convenience, as a method for distinguishing between two or more elements. In this way, reference to the first and second elements does not imply that only two elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be interpreted as "access." As used herein, two elements may be considered "connected" or "coupled" to each other by using one or more electrical wires, cables and/or printed electrical connections, and, as a number of non-limiting and non-inclusive examples, by using electromagnetic energy, having wavelengths in the radio frequency, microwave and/or optical regions (both visible and invisible).

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

(Supplementary Notes)

Now, supplementary notes on the present disclosure will follow below.

Future radio communication systems (for example, NR) are under study to support IMRs (Interference Measurement Resources), based on zero-power channel state information reference signals (ZP CSI-RSs), which are used in interference measurement for CSI feedback. To be more specific, the following ZP CSI-RS-based IMRs are under study:

- Aperiodic IMR
- Semi-persistent IMR
- Periodic IMR

As for ZP CSI-RS-based IMRs, the above three different time-domain behaviors may be configured in resource setting(s). The potential impact these IMRs have on the rate matching of a downlink data channel (PDSCH (Physical Downlink Shared CHannel)) is also under study.

For ZP CSI-RSs based on IMR configurations, following (1) to (5) are under discussion.

(1) Semi-persistent IMRs based on ZP CSI-RSs for interference measurement for CSI feedback should be supported.

(2) The signaling for dynamic control of at least one of triggering, activation and deactivation of IMR-based ZP CSI-RSs should be the same as that for non-zero-power CSI-RSs (NZP CSI-RSs (Non-Zero-Power Channel State Information-Reference Signal)). Note that, for dynamic control of activation and/or deactivation, RRC (Radio Resource Control) signaling and MAC control elements (MAC CEs (Medium Access Control Control Elements)) may be used, or RRC signaling and downlink control information (DCI) may be used.

(3) For periodic CSI reporting, semi-persistent CSI reporting and aperiodic CSI reporting, the combinations shown in Tables 1 to 3 below should be supported. Note that the abbreviations in Tables 1 to 3 below are as follows:

- CMR (Channel Measurement Resource): NZP CSI-RS that is configured for channel measurement;
- IMR (Interference Measurement Resource): ZP CSI-RS that is configured for interference measurement; and
- PR (Periodic), SP (Semi-Persistent) and AP (Aperiodic).

(3-1) Periodic CSI Reporting [Table 1]

|  | PR CMR | SP CMR | AP CMR |
|---|---|---|---|
| PR IMR | ○ | × | × |
| SP IMR | × | × | × |
| AP IMR | × | × | × |

(3-2) Semi-Persistent CSI Reporting [Table 2]

|  | PR CMR | SP CMR | AP CMR |
|---|---|---|---|
| PR IMR | ○ | ○ | × |

(continued)

|  | PR CMR | SP CMR | AP CMR |
|---|---|---|---|
| SP IMR | ○ | ○ | × |
| AP IMR | × | × | × |

(3-3) Aperiodic CSI Reporting [Table 3]

|  | PR CMR | SP CMR | AP CMR |
|---|---|---|---|
| PR IMR | ○ | ○ | ○ |
| SP IMR | ○ | ○ | ○ |
| AP IMR | ○ | ○ | ○ |

(4) For the patterns (RE patterns) of resource elements where IMR-based ZP CSI-RSs are allocated within one resource block (PRB (Physical Resource Block)), one or more RE patterns from the following candidates should be supported.

Here, y indicates the number of neighboring subcarriers, and z indicates the number of neighboring symbols.

- Two REs of neighboring subcarriers, that is, (y, z) = (2, 1).
- Four REs of neighboring subcarriers and/or symbols, that is, (y, z) = (4, 1) or (2, 2).
- Six REs of neighboring subcarriers, that is, (y, z) = (6, 1).
- Six REs that are allocated based on an allocation pattern with combtooth-like subcarriers in the subcarrier domain (this allocation pattern is also referred to as, for example, "2 comb," "comb-2," etc.). For example, in the same way as in configuration type 1 for demodulation reference signals (DM-RS (De-Modulation-Reference Signals)), ZP CSI-RSs are allocated to combs in one symbol.
- Four REs comprised of two sets of two neighboring subcarriers, with a gap of four subcarriers provided between the sets. For example, in the same manner as in configuration type 2 for DM-RSs, ZP CSI-RSs are allocated within one symbol.
- Twelve REs that are allocated based on an allocation pattern with two neighboring symbols and combtooth-like subcarriers in the subcarrier domain (this allocation pattern is also referred to as, for example, "2 comb," "comb-2," etc.). For example, in the same manner as in configuration type 1 for DMRSs, ZP CSI-RSs are allocated to combs in two symbols.
- 24 REs comprised of two sets of two neighboring symbols and two neighboring subcarriers, with a gap of four subcarriers provided between the sets. For example, in the same manner as in configuration type 2 for DM-RSs, ZP CSI-RSs are allocated in two symbols.
- Twelve REs of neighboring subcarriers, that is, (y, z) = (12, 1).
- 24 REs of neighboring subcarriers and two neighboring symbols, that is (y, z)=(12, 2)

When a plurality of RE patterns are supported among the above candidate RE patterns, the RE patterns may be configured by the network in a user terminal. In the event one RE pattern is supported, this RE pattern may be used on a fixed basis.

One fixed resource block level (RB-level) frequency density may be used. That is, ZP CSI-RSs may be allocated to the same RE locations for each PRB.

(5) For IMR-based ZP CSI-RSs, at least one of the following parameters may be configured by higher layer signaling (for example, RRC signaling).

- A parameter related to behavior in the time domain, indicating at least one of a periodic ZP CSI-RS, a semi-persistent ZP CSI-RS, and an aperiodic ZPCSI-RS.
- The period and/or the slot offset used for an IMR-based periodic ZP CSI-RS and/or semi-persistent ZP CSI-RS.
- Band configuration (for example, information about a BWP (Bandwidth Part) and/or a partial band within a BWP).
- An RE pattern in a PRB (which may be configured when, for example, multiple REs are supported).

Now, although the present invention has been described in detail above, it should be obvious to a person skilled in the art that the present invention is by no means limited to the embodiments described herein. The present invention can be implemented with various corrections and modifications, without departing from the spirit and scope of the present invention defined by the recitations of claims. Consequently, the description herein is provided only for the purpose of explaining examples, and should by no means be construed to limit the present invention in any way.

[Configuration 1]

A user terminal, including a receiving section that receives configuration information, which indicates allocation of an interference measurement resource in a unit resource, and a control section that controls measurement of a DL signal based on the configuration information.

[Configuration 2]

The user terminal according to configuration 1, in which the allocation of the interference measurement resource is based on allocation of a demodulation reference signal.

[Configuration 3]

The user terminal according to configuration 1 or configuration 2, in which the configuration information indicates one of a periodic interference measurement resource, a semi-persistent interference measurement resource and an aperiodic interference measurement resource.

[Configuration 4]

The user terminal according to one of configuration 1 to configuration 3, in which the interference measurement resource is time-multiplexed, frequency-multiplexed and/or space-multiplexed with another interference measurement resource.

[Configuration 5]

The user terminal according to one of configuration 1 to configuration 4, in which the configuration information indicates one of a plurality of candidates for the allocation of the interference measurement resource.

[Configuration 6]

A radio communication method, including the steps of receiving, in a user terminal, configuration information, which indicates allocation of an interference measurement resource in a unit resource, and controlling, in the user terminal, measurement of a DL signal based on the configuration information.

The disclosure of Japanese Patent Application No. 2017-196409, filed on September 20, 2017, including the specification, drawings and abstract, is incorporated herein by reference in its entirety.

**Claims**

1. A user terminal, comprising:

   a receiving section that receives configuration information, which indicates allocation of an interference measurement resource in a unit resource; and
   a control section that controls measurement of a DL signal based on the configuration information.

2. The user terminal according to claim 1, wherein the allocation of the interference measurement resource is based on allocation of a demodulation reference signal.

3. The user terminal according to claim 1 or claim 2, wherein the configuration information indicates one of a periodic interference measurement resource, a semi-persistent interference measurement resource and an aperiodic interference measurement resource.

4. The user terminal according to one of claim 1 to claim 3, wherein the interference measurement resource is time-multiplexed, frequency-multiplexed and/or space-multiplexed with another interference measurement resource.

5. The user terminal according to one of claim 1 to claim 4, wherein the configuration information indicates one of a plurality of candidates for the allocation of the interference measurement resource.

6. A radio communication method comprising the steps of:

   receiving, in a user terminal, configuration information, which indicates allocation of an interference measurement resource in a unit resource; and
   controlling, in the user terminal, measurement of a DL signal based on the configuration information.

FIG. 1

FIG. 2

EP 3 687 214 A1

FIG. 3

図4A

CSI-RS RESOURCE DISPLAY

| BIT | MESSAGE |
|---|---|
| 000 | CSI-RS RESOURCE #0 |
| 001 | CSI-RS RESOURCE #1 |
| 010 | CSI-RS RESOURCE #2 |
| 011 | CSI-RS RESOURCE #3 |
| 100 | CSI-RS RESOURCE #4 |
| 101 | CSI-RS RESOURCE #5 |
| 110 | CSI-RS RESOURCE #6 |
| 111 | CSI-RS RESOURCE #7 |

図4B

CSI-IMリソース表示

| BIT | MESSAGE |
|---|---|
| 000 | CSI-IM RESOURCE #0 |
| 001 | CSI-IM RESOURCE #1 |
| 010 | CSI-IM RESOURCE #2 |
| 011 | CSI-IM RESOURCE #3 |
| 100 | CSI-IM RESOURCE #4 |
| 101 | CSI-IM RESOURCE #5 |
| 110 | CSI-IM RESOURCE #6 |
| 111 | CSI-IM RESOURCE #7 |

FIG. 4

DCI #1 OF SLOT #1

| PDSCH PORT | CSI-IM RESOURCE INDEX |
|---|---|
| P1 | 001 |

DCI #2 OF SLOT #2

| PDSCH PORT | CSI-IM RESOURCE INDEX |
|---|---|
| P3, P4 | 001 |

CSI-IM RESOURCE #1

DMRS PORT #1    DMRS PORT #2    DMRS PORT #3    DMRS PORT #4    DMRS PORT #5    DMRS PORT #6    DMRS PORT #7    DMRS PORT #8

CSI-RS PORT #1    CSI-RS PORT #2

PDSCH PORT OF SLOT #1

PDSCH PORT OF SLOT #2

DMRS PORT    ZP CSI-RS PORT

FIG. 5

CSI-IM RESOURCE DISPLAY

| BIT | MESSAGE |
|-----|---------|
| 000 | CSI-IM RESOURCE #0 |
| 001 | CSI-IM RESOURCE #1 |
| 010 | CSI-IM RESOURCE #2 |
| 011 | CSI-IM RESOURCE #3 |
| 100 | CSI-IM RESOURCE #4 |
| 101 | CSI-IM RESOURCE #5 |
| 110 | CSI-IM RESOURCE #6 |
| 111 | CSI-IM RESOURCE #7 |

FIG. 6

DCI#2

| CSI-IM RESOURCE INDEX | SIGNAL PORT BIT MAP |
|---|---|
| 001 | 00110000 |

CSI-IM RESOURCE #1

| CSI-RS PORT #1 | CSI-RS PORT #2 | CSI-RS PORT #3 | CSI-RS PORT #4 | CSI-RS PORT #5 | CSI-RS PORT #6 | CSI-RS PORT #7 | CSI-RS PORT #8 |
|---|---|---|---|---|---|---|---|

CSI-RS RESOURCE

▨ NZP CSI-RS PORT    ☐ ZP CSI-RS PORT

FIG. 7

EP 3 687 214 A1

FIG. 8A

FIG. 8B

DL CONTROL CHANNEL

ZP CSI-RS (LAYER (OR AP) #0)

ZP CSI-RS (LAYER (OR AP) #1)

EP 3 687 214 A1

# FIG. 9A

1 SLOT

FREQUENCY

TIME

DL CONTROL CHANNEL

# FIG. 9B

1 SLOT

FREQUENCY

TIME

DL CONTROL CHANNEL

#0
#1
#2
#3
#4
#5
#6
#7

#8
#9
#10
#11

LAYER (OR AP)

EP 3 687 214 A1

# FIG. 10A

1 SLOT

FREQUENCY

TIME

DL CONTROL CHANNEL

# FIG. 10B

1 SLOT

FREQUENCY

TIME

DL CONTROL CHANNEL

#0
#1
#2
#3
#4
#5
#6
#7

#8
#9
#10
#11

LAYER (OR AP)

# FIG. 11A

FREQUENCY

1 SLOT

TIME

# FIG. 11B

FREQUENCY

1 SLOT

TIME

DL CONTROL CHANNEL

ZP CSI-RS (LAYER (OR AP) #0)

EP 3 687 214 A1

FIG. 12

FIG. 13

TO HIGHER STATION APPARATUS 30 OR TO OTHER RADIO BASE STATIONS 10

106 COMMUNICATION PATH INTERFACE

104 BASEBAND SIGNAL PROCESSING SECTION

103 TRANSMITTING /RECEIVING SECTION

102 AMPLIFYING SECTION

105 CALL PROCESSING SECTION

103 TRANSMITTING /RECEIVING SECTION

102 AMPLIFYING SECTION

10

101

101

EP 3 687 214 A1

FIG. 14

EP 3 687 214 A1

FIG. 15

FIG. 16

FIG. 17

# EP 3 687 214 A1

## INTERNATIONAL SEARCH REPORT

| | International application No. |
|---|---|
| | PCT/JP2018/034526 |

### A. CLASSIFICATION OF SUBJECT MATTER
Int.Cl. H04W24/10(2009.01)i, H04W72/04(2009.01)i, H04W88/02(2009.01)i

According to International Patent Classification (IPC) or to both national classification and IPC

### B. FIELDS SEARCHED

Minimum documentation searched (classification system followed by classification symbols)
Int.Cl. H04B7/24-7/26, H04W4/00-99/00

| Documentation searched other than minimum documentation to the extent that such documents are included in the fields searched | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | LG ELECTRONICS, Discussion on CSI measurement [online], 3GPP TSG RAN WG1 adhoc_NR_AH_1709 R1-1715857, 12 September 2017, [retrieval date 16 October 2018], internet<URL:http://www.3gpp.org/ftp/tsg_ran/WG1_RL1/TSGR1_AH/NR_AH_1709/Docs/R1-1715857.zip>, pp. 1-7 | 1, 3, 5-6<br>2, 4 |
| Y | NTT DOCOMO, INC., Views on CSI measurement for NR, 3GPP TSG-RAN WG1 NR#3 R1-1716080, 12 September 2017, [retrieval date 16 October 2018], internet <URL:http://www.3gpp.org/ftp/tsg_ran/WG1_RL1/TSGR1_AH/NR_AH_1709/Docs/R1-1716080.zip>, pp. 1-7 | 2, 4 |
| P, X | LG ELECTRONICS, INTEL, NTT DOCOMO, SAMSUNG, WF on remaining issues on ZP CSI-RS based IMR, 3GPP TSG RAN WG1 adhoc_NR_AH_1709 R1-1716827, 20 September 2017, [retrieval date 16 October 2018], internet<URL:http://www.3gpp.org/ftp/tsg_ran/WG1_RL1/TSGR1_AH/NR_AH_1709/Docs/R1-1715857.zip>, pp. 1-6 | 1-6 |

☐ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 18 October 2018 (18.10.2018) | 06 November 2018 (06.11.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

41

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2017196409 A